**Europäisches Patentamt**

**European Patent Office**

**Office européen des brevets**

(19)

(11) Numéro de publication : **0 497 669 A1**

## (12) DEMANDE DE BREVET EUROPEEN

(21) Numéro de dépôt : **92400188.6**

(22) Date de dépôt : **24.01.92**

(51) Int. Cl.$^5$ : **H04Q 11/00, H04L 12/56**

(30) Priorité : **29.01.91 FR 9100977**

(43) Date de publication de la demande :
**05.08.92 Bulletin 92/32**

(84) Etats contractants désignés :
**AT BE CH DE DK ES FR GB IT LI NL SE**

(71) Demandeur : **ALCATEL CIT**
**12 Rue de la Baume**
**F-75008 Paris (FR)**

(72) Inventeur : **Jacob, Jean-Baptiste**
**2, rue de Kertanguy, Saint-Quay-Perros**
**F-22700 Perros-Guirec (FR)**
Inventeur : **Le Roy, Guy**
**Kerwegan-Servel**
**F-22300 Lannion (FR)**
Inventeur : **Gabriagues, Jean-Michel**
**3 chemin des Ecoliers**
**F-91530 Le Val Saint-Germain (FR)**

(74) Mandataire : **Sciaux, Edmond et al**
**c/o SOSPI, 14-16 rue de la Baume**
**F-75008 Paris (FR)**

(54) **Centre satellite photonique.**

(57) L'invention concerne un centre satellite photonique, pour raccorder à un réseau de télécommuication des terminaux d'abonné
émettant et recevant des données sous la forme
de cellules, de longueur fixe, par un multiplexage temporel asynchrone, comportant :
— un réseau de connexion (5) relié à un
central de rattachement ;
— une unité de commande (8) reliée au
réseau de connexion (5) ;
— une pluralité de concentrateurs (2, 7) reliés
au réseau de connexion (5) ;
— des circuits d'accès d'abonné (1, 6) reliés
respectivement aux terminaux d'abonné et aux
concentrateurs (2, 7) ;
La structure du centre satellite selon l'invention est optimisée pour une meilleure utilisation
des composants photoniques. Chaque concentrateur (2, 7) comporte des moyens pour multiplexer spectralement des cellules reçues en
provenance de terminaux d'abonné ; et
comporte, en aval de ces derniers, des moyens
pour mettre en phase les cellules multiplexées,
par rapport à une horloge locale. Le réseau de
connexion (5) comporte :
— des moyens pour traduire une étiquette de
circuit virtuel ou de faisceau virtuel, que
comporte chaque cellule émise ou reçue par le
centre satellite, et lui adjoindre une étiquette de
routage pour router cette cellule dans ce centre
satellite ;
— des moyens pour réaliser une fonction
police.
Application aux réseaux de télécommunication à multiplexage temporel asynchrone.

FIG.1

EP 0 497 669 A1

L'invention concerne un centre satellite photonique pour raccorder à un réseau de télécommunication des terminaux d'abonné utilisant un multiplexage temporel asynchrone. Le multiplexage temporel asynchrone permet de transmettre tous les types d'information sous une forme unique constituée de paquets de bits, de longueur fixe, appelés cellules et comportant notamment une étiquette de circuit virtuel identifiant une communication et une étiquette de faisceau virtuel identifiant éventuellement un faisceau de communications.

Il est connu de raccorder des terminaux d'abonné à un réseau de télécommunication, par l'intermédiaire d'un centre satellite constitué : d'une unité de commande, de plusieurs concentrateurs, d'un réseau de connexion relié d'une part aux concentrateurs, et d'autre part à un central de rattachement. Les concentrateurs sont munis de circuits d'accès d'abonné reliés aux terminaux d'abonné. Le réseau de connexion est généralement situé à une certaine distance du central de rattachement. Les concentrateurs peuvent être situés à proximité immédiate du réseau de connexion ou bien peuvent être éloignés.

La demande de brevet français n° 2 646 036 décrit un centre satellite numérique réalisé uniquement en technologie électronique, pour raccorder à un réseau de télécommunication des terminaux d'abonné utilisant diverses techniques de transmission, notamment le multiplexage temporel asynchrone. Le réseau de connexion est relié à un central numérique de rattachement, et à l'unité de commande au moyen de liaisons multiplex asynchrones.

Les cellules peuvent contenir des données d'une communication, ou des données de maintenance, ou des données de signalisation. Lorsqu'un abonné ne transmet pas de données, son terminal d'abonné transmet des cellules vides à destination du concentrateur. Réciproquement, si un concentrateur n'a pas de données à transmettre sur une voie de communication qui est établie vers un terminal d'abonné, le concentrateur lui envoie des cellules vides.

Dans ce centre satellite de type connu, chaque concentrateur comporte des circuits d'accès d'abonné, et deux étages de concentration.

Chaque circuit d'accès d'abonné réalise notamment les fonctions suivantes :

– une conversion optique-électronique, et la conversion inverse, pour chaque terminal d'abonné qui est relié au concentrateur par une ligne à fibre optique;

– une délimitation des cellules reçues du terminal d'abonné, c'est-à-dire repérer le début de chaque cellule;

– un désembrouillage du champ de données de chaque cellule reçue d'un terminal d'abonné;

– un embrouillage du champ de données de chaque cellule émise par le concentrateur à destination d'un terminal d'abonné;

– un calcul de mot de détection d'erreur, portant sur l'en-tête de chaque cellule émise du concentrateur vers un terminal d'abonné, ou reçue d'un terminal d'abonné;

– une remise en phase des cellules émises par un terminal d'abonné, par rapport à une base de temps locale, du centre satellite;

– une fonction police, consistant à surveiller les débits émis par les terminaux d'abonné;

– une extraction de cellules de signalisation, parmi les cellules émises par un terminal d'abonné, et une injection de cellules de signalisation parmi les cellules émises par le concentrateur à destination d'un terminal d'abonné;

– une conversion des étiquettes de circuit virtuel et de faisceau virtuel que comporte chaque cellule émise par un terminal d'abonné;

– un calcul d'étiquette de routage, pour router chaque cellule dans le réseau de connexion; et insertion de cette étiquette devant l'entête de la cellule;

– une élimination des cellules vides émises par un terminal d'abonné;

– une insertion de cellules vides parmi les cellules émises du concentrateur vers les terminaux d'abonnés.

Le premier étage de concentration comporte une matrice de commutation temporelle asynchrone, commandée par un micro-processeur. Le second étage de concentration comporte une autre matrice de commutation temporelle asynchrone, ou un multiplexeur-démultiplexeur temporel, commandé par un microprocesseur.

La structure de ce centre satellite est optimisée pour utiliser des composants électroniques, mais elle n'est pas optimale pour utiliser des composants photoniques. Ceux-ci présentent l'avantage d'une plus grande rapidité, et autorisent un multiplexage spectral. Conserver la structure des centres satellites de type connu conduirait à une sous-utilisation des performances de la technologie photonique.

Le but de l'invention est de proposer un centre satellite photonique ayant une structure qui ne soit pas simplement déduite de la structure d'un centre satellite électronique, connu, mais qui soit optimisée pour l'utilisation de composants photoniques.

L'objet de l'invention est un centre satellite photonique pour raccorder à un réseau de télécommunication des terminaux d'abonné émettant et recevant des données sous la forme de cellules, de longueur fixe, par un multiplexage temporel asynchrone, comportant :

– un réseau de connexion relié à un central de rattachement;

– une unité de commande reliée au réseau de connexion;

– une pluralité de concentrateurs reliés au réseau de connexion;

– des circuits d'accès d'abonné reliés respectivement aux terminaux d'abonné et aux concentrateurs;

ce réseau, cette unité de commande, ces concentrateurs et ces terminaux de ligne comportant :

-- des moyens pour traduire une étiquette de circuit virtuel ou de faisceau virtuel, que comporte chaque cellule émise ou reçue par le centre satellite, et lui adjoindre une étiquette de routage pour router cette cellule dans ce centre satellite;

-- des moyens pour mettre en phase avec une horloge locale chaque cellule émise par un terminal d'abonné;

-- des moyens pour réaliser une fonction police;

caractérisé en ce que les moyens pour traduire une étiquette de circuit virtuel ou de faisceau virtuel, pour chaque cellule émise ou reçue par le centre satellite, et lui adjoindre une étiquette de routage, sont situés dans le réseau de connection et sont communs pour traiter les cellules émises ou reçues en direction de tous les terminaux d'abonné reliés à au moins un concentrateur.

Selon une autre caractéristique, les moyens pour réaliser la fonction police sont situés dans le réseau de connexion et sont communs pour traiter les cellules reçues en provenance de tous les terminaux d'abonné reliés à au moins un concentrateur.

Le centre satellite ainsi caractérisé permet de réduire le nombre de dispositifs de traduction d'étiquette de circuit virtuel ou de faisceau virtuel, d'insertion d'étiquette de routage, et de police, puisqu'ils sont communs à un grand nombre de terminaux d'abonnés, 256 par exemple. Le colt d'un centre satellite selon l'invention est donc réduit, par rapport à celui qu'il aurait s'il avait la même structure qu'un centre satellite de type connu.

L'invention sera mieux comprise et d'autres détails apparaîtront à l'aide de la description ci-dessous d'un exemple de réalisation, et des figures l'accompagnant :

– la figure 1 représente le schéma synoptique d'un exemple de réalisation d'un centre satellite photonique selon l'invention;

– la figure 2 représente le schéma synoptique d'un exemple de réalisation d'un circuit d'accès d'abonné faisant partie de l'exemple de réalisation représenté sur la figure 1;

– la figure 3 représente le schéma synoptique d'un exemple de réalisation d'un concentrateur faisant partie de l'exemple représenté sur la figure 1;

– la figure 4 représente le schéma synoptique d'un exemple de réalisation d'un réseau de connexion faisant partie de l'exemple représenté sur la figure 1;

– la figure 5 représente le schéma synoptique d'un exemple de réalisation d'un étage que comporte chaque concentrateur, et qui réalise une première concentration par multiplexage temporel et spectral, statistique, non synchrone;

– la figure 6 représente le schéma synoptique d'un exemple de réalisation d'un étage que comporte chaque concentrateur et qui réalise une remise en phase des cellules, par rapport à une horloge locale du centre satellite;

– les figures 7 et 8 représentent les schémas synoptiques de deux exemples de réalisation d'un étage que comporte chaque concentrateur et qui réalise un changement de débit des cellules émises par un circuit d'accès d'abonné, à destination du réseau de connexion;

– la figure 9 représente le schéma synoptique d'un exemple de réalisation d'un étage que comporte chaque concentrateur et qui réalise une seconde concentration par multiplexage temporel périodique;

– la figure 10 représente le schéma synoptique d'un exemple de réalisation d'une matrice de commutation du réseau de connexion de l'exemple de réalisation représenté sur la figure 1;

– la figure 11 représente un schéma synoptique plus détaillé de cette matrice de commutation;

– la figure 12 représente le schéma synoptique d'un exemple de réalisation d'un étage de démultiplexage temporel que comporte chaque concentrateur et qui réalise une première déconcentration des cellules émises de ce concentrateur vers un terminal d'abonné;

– les figures 13 et 14 représentent les schémas synoptiques de deux exemples de réalisation d'un étage de changement de débit que comporte chaque concentrateur pour traiter les cellules transmises du concentrateur vers un terminal d'abonné;

– la figure 15 représente le schéma synoptique d'un exemple de réalisation d'un étage que comporte chaque concentrateur, et qui réalise une seconde déconcentration par un démultiplexage spectral des cellules émises par ce concentrateur vers un terminal d'abonné;

– Les figures 16 et 17 représentent les schémas synoptiques d'un exemple de réalisation d'un premier et d'un second multiplexeur-démultiplexeur avec changement de débit, utilisés pour raccorder un concentrateur éloigné, au réseau de connexion;

– la figure 18 représente le schéma synoptique d'un exemple de réalisation de la partie multiplexeur du premier multiplexeur-démultiplexeur avec changement de débit;

– la figure 19 représente le schéma synoptique d'un exemple de réalisation de la partie démultiplexeur;

– la figure 20 représente le schéma synoptique d'un exemple de réalisation de la partie réalisant un changement de débit.

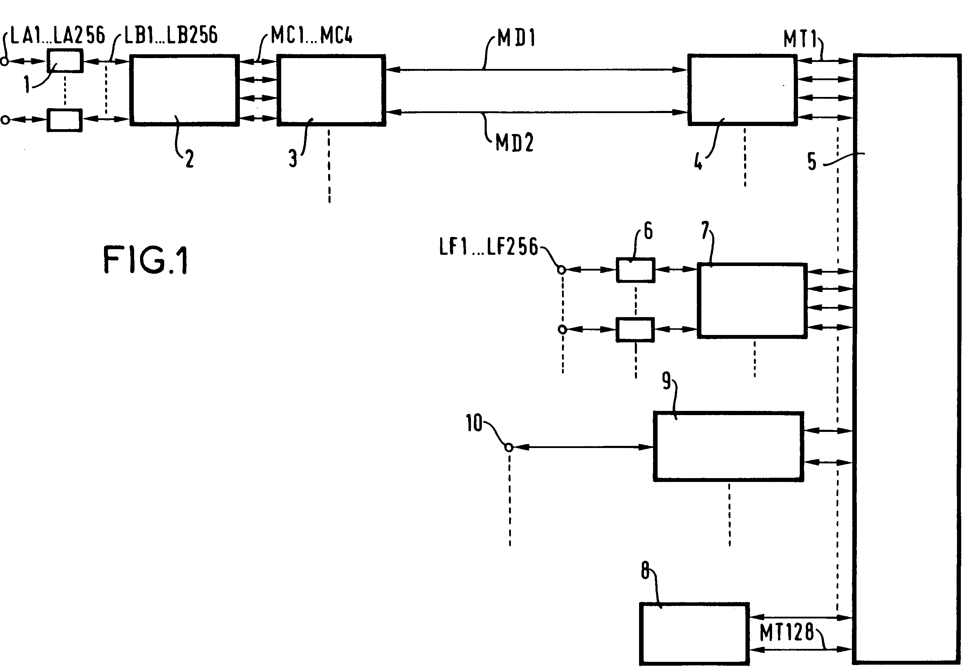

La figure 1 représente le schéma synoptique d'un exemple de réalisation d'un centre satellite photonique, selon l'invention. Il comprend :
- des bornes LA1,..., LA256, LF1..., LF256 reliées respectivement à des terminaux d'abonné émettant et recevant des données sous la forme de cellules, de longueur fixe, par un multiplexage temporel asynchrone;
- des circuits d'accès d'abonné, 1 et 6 par exemple;
- des concentrateurs, tels que les concentrateurs 2 et 7;
- un réseau de connexion, 5, comportant 128 accès bidirectionnels;
- une unité de commande, 8;
- des multiplexeurs-démultiplexeurs, 9 par exemple;
- et des bornes d'entrée-sortie, telle que 10, reliées à un centre de rattachement appartenant au réseau général de télécommunication, par des multiplex à multiplexage temporel asynchrone.

Chaque abonné est relié à un circuit d'accès d'abonné, tel que circuit 1, par une fibre optique monomode bidirectionnelle ayant un débit de 622 Mb/s, par exemple. Chaque circuit d'accès est relié à une borne d'entrée d'un concentrateur par une fibre optique ayant ce même débit. Par exemple, le concentrateur 2 est relié à 256 circuits d'accès d'abonné, par 256 lignes LB1,..., LB256.

Deux catégories de concentrateurs sont à distinguer, selon leur distance par rapport au réseau de connexion 5. Des concentrateurs éloignés, tel que le concentrateur 2, sont reliés au réseau de connexion 5 par l'intermédiaire : d'un multiplexeur-démultiplexeur 3, de deux lignes à fibre optique, MD1 et MD2, et d'un multiplexeur-démultiplexeur 4. Le multiplexeur-démultiplexeur 3 est situé à proximité du concentrateur 2 et lui est relié par quatre multiplex bidirectionnels MC1,...,MC4. Le multiplexeur-démultiplexeur 4 est situé à proximité du réseau de connexion 5 et lui est relié par quatre multiplex bidirectionnels MT1,...,MT4. Les multiplex MC1,...,MC4, MT1,...,MT4, ont un débit de 2,6 Gb/s et une charge de 0,4 erlang. Les lignes MD1,...,MD2 ont un débit de 2,5 Gb/s et une charge de 0,8 erlang, correspondant aux caractéristiques normalisées des réseaux de transport à fibre optique avec multiplexage temporel asynchrone.

Les multiplex du réseau de connexion 5 ont un débit de 2,6 Gb/s avec une charge maximale de 0,4 erlang. Cette valeur de débit a été retenue car elle permet de tirer partie de la grande rapidité de la technologie photonique, et, de plus, la charge réduite à 0,4 permet de réduire la taille des mémoires tampons utilisées dans le réseau de connexion 5, la réduction de la taille de ces mémoires étant très importantes lorsque la charge passe de 0,8 à 0,4. Mais les systèmes de transmission reliant les concentrateurs éloignés au réseau de connexion 5 doivent avoir une charge maximale compatible avec le rendement optimal d'une liaison, qui correspond à une charge de 0,8 erlang.

Pour tirer parti de la rapidité de la technologie photonique dès les premiers étages du centre satellite, les cellules arrivant des terminaux sont multiplexées au débit de 2,6 Gb/s. Cette valeur de débit est la même pour tous les concentrateurs afin de donner la même structure à tous, quelle que soit leur distance par rapport au centre de rattachement. Pour assurer la transmission entre un concentrateur éloigné tel que le concentrateur 2, et le réseau de connexion 5, il est donc prévu un multiplexeur-démultiplexeur 3 qui réalise un multiplexage dans le rapport 2 à 1 pour les cellules en provenance d'un terminal d'abonné, et un multiplexeur-démultiplexeur 4 qui réalise ensuite un démultiplexage dans un rapport 1 à 2 sur ces mêmes cellules. Naturellement, les multiplexeurs-démultiplexeurs 3 et 4 réalisent les fonctions inverses pour des cellules provenant du réseau de connexion et à destination d'un terminal d'abonné. Le multiplexeur-démultiplexeur 3 réalise en outre un changement de débit, de 2,6 Gb/s à 2,5 Gb/s, et le multiplexeur-démultiplexeur 4 réalise le changement de débit inverse pour adapter le débit des entrées-sorties des multiplexeurs-démultiplexeurs 3 et 4 au débit normalisé des lignes MD1 et MD2.

Les concentrateurs proches du réseau de connexion 5, tel que le concentrateur 7, sont reliés directement à ce réseau, chacun par quatre multiplex bidirectionnels ayant chacun un débit de 2,6 Gb/s et une charge de 0,4 erlang. Dans cet exemple, le réseau de connexion 5 possède 128 accès bidirectionnels pour 128 multiplex MT1 à MT128, au débit de 2,6 Gb/s et de charge égale à 0,4 erlang. Il permet de raccorder 16 concentrateurs, soit 4086 terminaux d'abonné. Ces 16 concentrateurs utilisent 64 accès du réseau de connexion 5. Deux autres accès sont reliés à l'unité de commande 8 par deux multiplex, et 62 autres accès sont reliés à 31 multiplexeurs-démultiplexeurs, qui assurent une liaison avec le centre de rattachement. Parmi eux, seul le multiplexeur-démultiplexeur 9 est repésenté à titre d'exemple.

Le multiplexeur-démultiplexeur 9 réalise un multiplexage temporel des cellules fournies par le réseau de connexion 5 et à destination du réseau de télécommunication général, en transformant le débit de 2,6 Gb/s à 2,5 Gb/s car il modifie les en-têtes des cellules en supprimant l'étiquette de routage qui était nécessaire jusqu'à la sortie du réseau de connexion 5 mais pas au-delà. Il modifie la charge des multiplex sortant du réseau de connexion 5 en l'augmentant de 0,4 erlang à 0,8 erlang pour qu'elle soit mieux compatible avec le rendement optimal des lignes de transmission vers le réseau de télécommunication général. Pour les cellules venant du réseau général de télécommunication, il réalise la transformation inverse. Il augmente le débit de 2,5 à 2,6 Gb/s en laissant 24 périodes de bit libres devant chaque cellule, pour l'insertion ultérieure d'une étiquette de routage.

Dans la plupart des moyens représentés sur la figure 1, les fonctions sont réalisées par des circuits photoniques, mais ils sont commandés par des circuits électroniques, notamment l'unité de commande 8, la technologie des mémoires photoniques étant, pour le moment, insuffisamment développée pour remplacer tous les circuits électroniques de commande, par des circuits photoniques.

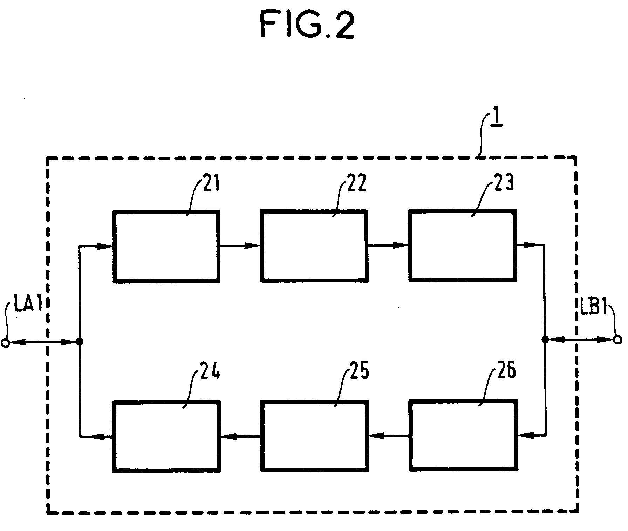

La figure 2 représente le schéma synoptique d'un circuit d'accès d'abonné tel que le circuit 1 par exemple. Il comprend : deux séries de 3 étages reliées en parallèle, pour traiter d'une part les cellules en provenance d'un terminal d'abonné, et d'autre part les cellules à destination de ce terminal d'abonné. Les cellules en provenance d'un terminal d'abonné par la ligne bidirectionnelle LA1 sont traitées tout d'abord par un étage 21 réalisant une délimitation des cellules, c'est-à-dire repérant le début de chacune des cellules. Puis elles sont traitées par un étage 22 de désembrouillage des données contenues dans chaque cellule. Puis elles sont traitées par un étage 23 d'extraction des cellules vides, qui sont émises par le terminal d'abonné en l'absence de données à transmettre. Enfin ces cellules sont émises sur la ligne bidirectionnelle LB1.

Les cellules à destination du terminal d'abonné arrivent par la ligne bidirectionnelle LB1 et, sont traitées par un étage 26 d'insertion de cellules vides, de telle sorte que chaque intervalle de temps correspondant à une cellule est occupé par l'émission d'une cellule vers le terminal d'abonné, même quand il n'y a pas de cellules de données à transmettre. Puis les cellules, vides ou pas, sont traitées par un étage 25 d'embrouillage des données. Puis toutes les cellules à transmettre au terminal d'abonné sont traitées par un étage 24 qui calcule un mot de détection d'erreur portant sur l'entête de chaque cellule. Enfin les cellules sont émises sur la ligne LA1. L'embrouillage, le désembrouillage, et le calcul du mot de détection d'erreur sont réalisés conformément à la recommandation CCITT 1432, au moyen de circuits photoniques dérivés directement des circuits électroniques classiques, en remplaçant les composants électroniques par des composants photoniques remplissant respectivement les mêmes fonctions. Leur réalisation est donc à la portée de l'Homme de l'Art.

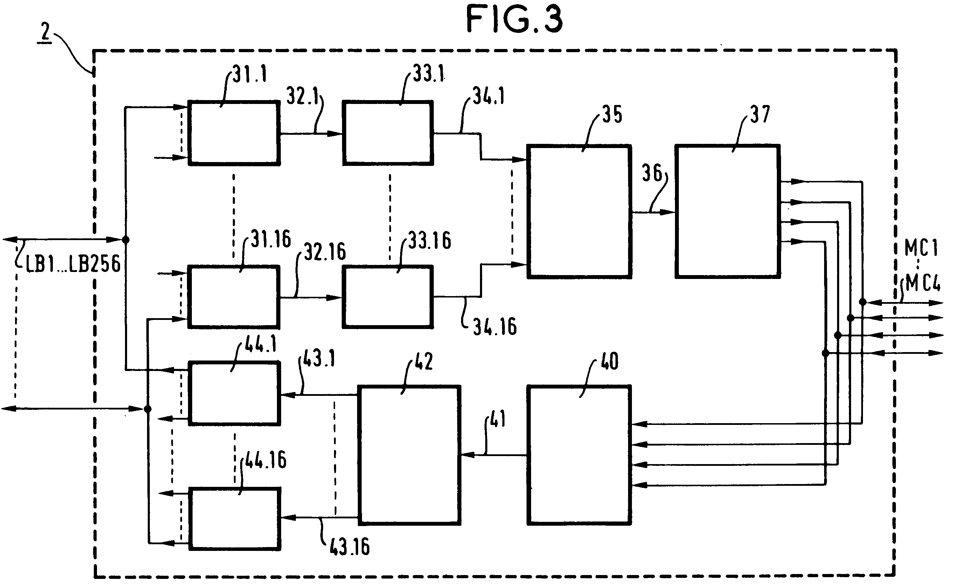

La figure 3 représente le schéma synoptique d'un concentrateur tel que le concentrateur 2. Il comprend, en parallèle, deux séries d'étages traitant respectivement les cellules en provenance et à destination des circuits d'accès d'abonné. Les cellules en provenance de 256 circuits d'accès d'abonné, par les 256 lignes LB1,...,LB256, sont traitées tout d'abord par un étage 31 constitué de seize modules 31.1 à 31.16 en parallèle. Ces seize modules possèdent chacun seize entrées reliées à seize lignes parmi les lignes LB1,..., LB256. Considérons, à titre d'exemple le module 31.1. Il réalise, pour seize lignes LB1,..., LB16 une concentration par un multiplexage temporel et spectral, statistique, non synchrone. Le module 31.1 fournit sur une fibre optique unique 32.1, avec un débit de 622 Mb/s, des cellules codées sur 16 longueurs d'ondes différentes, autrement dit 16 couleurs.

Ces cellules sont traitées ensuite par un étage 33 de remise en phase par rapport à une horloge locale du centre satellite L'étage 33 est constitué de seize modules 33.1 à 33.16, en parallèle. Ces seize modules possèdent chacun une entrée reliée respectivement à une sortie d'un module 31.1 à 31.16. Par exemple, le module 33.1 remet en phase des cellules fournies par le module 31.1 via la fibre optique 32.1. A la sortie de ce module 33.1, une fibre optique 34.1 achemine les cellules, remises en phase, vers un étage 35 de multiplexage spectral et de changement de débit. L'étage 35 possède seize entrées reliées respectivement aux sorties des 16 modules 33.1 à 33.16 par seize fibres optiques 34.1 à 34.16. Sur chacune de ses entrées, il reçoit des cellules pouvant prendre 16 couleurs, avec un débit 622 Mb/s, et il restitue sur une sortie unique des cellules de 16 couleurs à 2,6 Gb/s. Une fibre optique 36 transmet ces cellules à un étage 37 de multiplexge temporel périodique, pour répartir ces cellules sur quatre multiplex MC1,...,MC4, à un débit de 2,6 Gb/s et avec une charge de 0,4 erlang.

Les cellules sont multiplexées spectralement dans l'étage 31 pour diviser par seize le nombre de modules de l'étage 33 de remise en phase. Les cellules restituées par l'étage 33 sont remultiplexées spectralement par l'étage 35, de façon à attribuer seize couleurs différentes, les unes des autres, respectivement aux seize cellules reçues sur les seize entrées de l'étage 35. Grâce à ce remultiplexage spectral, il est possible d'utiliser un seul module, dans l'étage 35, pour traiter les cellules provenant de seize modules de l'étage 33, correspondant à 256 terminaux d'abonné.

Par contre, ce multiplexage spectral ne peut pas être conservé dans le réseau de connexion 5. C'est pourquoi il est prévu un étage 37 qui remplace le multiplexage spectral de 16 couleurs, sur la fibre optique 36, par un multiplexage temporel périodique sur quatre fibres optiques. Les cellules émises sur ces quatre fibres, constituant les multiplex MC1,..., MC4, peuvent avoir des couleurs quelconques, ces couleurs ne sont plus significatives d'un multiplexage spectral.

Les cellules en provenance du réseau de connexion 5 et à destination de 256 terminaux d'abonné sont fournies à un étage 40 par les multiplex MC1,...,MC4. Ces cellules ont été mises en ordre par le réseau de connexion 5 de telle sorte qu'elles puissent être démultiplexées temporellement par un simple démultiplexage temporel périodique. L'étage 40 réalise une première déconcentration par un démultiplexage temporel périodique, et réalise un multiplexage spectral permettant de simplifier les étages situés en aval.

Les cellules arrivant du réseau de connexion 5 peuvent avoir une couleur quelconque. L'étage 40 les regroupe sur une seule fibre 41 en leur attribuant seize couleurs différentes. Le débit de 2,6 Gb/s est conservé, par conséquent chaque paquet de seize cellules colorées de seize couleurs différentes est suivi d'un intervalle vide, de durée égale à trois périodes de cellule.

Puis un étage 42 fait un changement de débit de 2,6 Gb/s à 657 Mb/s et un premier démultiplexage spectral. Seize fibres optiques 43.1 à 43.16 transmettent à un étage 44 les cellules fournies par l'étage 42, et qui sont multiplexées spectralement sur 16 couleurs différentes avec un débit de 657 Mb/S. L'étage 44 comporte seize modules 44.1 à 44.16 en parallèle. Chaque module réalise une deuxième déconcentration par un second démultiplexage spectral. Chaque module fournit des cellules à 16 lignes parmi les 256 lignes LB1,...,LB256. Il réalise un ajustement de débit à 622 Mb/s, consistant à supprimer les 24 bits d'étiquette de routage, adjoints à chaque cellule, quine sont pas utiles au-delà de cet étage 44.

Il apparaît que chaque module 33.1,...,33.16 de remise en phase est en aval d'un module 31.1,...,31.16 de multiplexage temporel et spectral, qui réalise une première concentration correspondant à 16 terminaux d'abonnés. Par conséquent, un centre satellite selon l'invention nécessite seize fois moins de modules 33.1,...,33.16 de remise en phase, qu'un centre satellite de type connu.

Grâce au multiplexage spectral, l'étage de changement de débit, 35, est commun pour 256 terminaux d'abonné. Par conséquent, un centre satellite selon l'invention nécessite 256 fois moins de dispositifs 35 de chargement de débit, qu'un centre satellite de type connu.

Grâce au multiplexage spectral réalisé par l'étage 40 en amont de l'étage 42 de changement de débit, ce dernier est commun à 256 terminaux d'abonné. Au contraire, il devrait être dupliqué seize fois s'il n'y avait pas de multiplexage spectral.

Grâce au multiplexage spectral subsistant jusqu'à l'étage 44, la fonction ajustement de débit est réalisée dans chaque module 44.1 à 44.16 pour seize terminaux d'abonné.

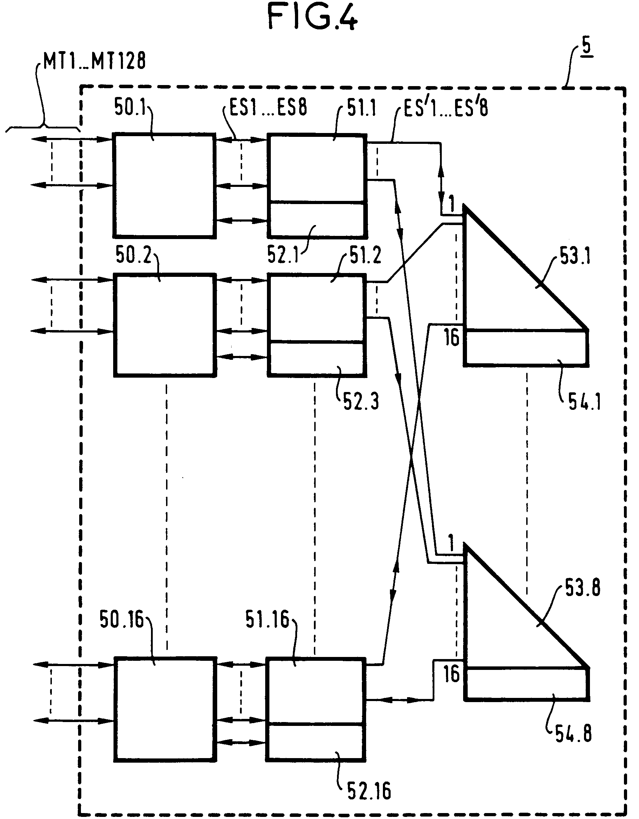

La figure 4 représente le schéma synoptique d'un exemple de réalisation du réseau de connexion 5. Il comporte 16 dispositifs identiques, 50.1,..., 50.16, chacun ayant huit entrées-sorties reliées respectivement à huit des multiplex MT1,...,MT128 pour : vérifier les en-têtes de cellule; traduire l'étiquette de circuit virtuel ou l'étiquette de faisceau virtuel de chaque cellule; insérer une étiquette de routage, devant l'en-tête de chaque cellule; calculer un nouveau mot de détection d'erreur; et remplir la fonction police, consistant à surveiller le débit sur chaque communication, c'est-à-dire correspondant à chaque circuit virtuel ou faisceau virtuel.

Il comprend en outre 24 matrices de commutation 16X16, identiques, parmi lesquelles seize matrices, 51.1,...,51.16, sont utilisées en configuration 8X8 accès bidirectionnels pour constituer simultanément un premier et un troisième étage de commutation, et 8 matrices 53.1,...,53.8 sont utilisées repliées pour offrir 16 entrées-sorties, et constituer un deuxième étage de commutation.

Chaque dispositif 50.1,...,50.16 comporte en outre huit entrées-sorties reliées respectivement à 8 entrées-sorties de l'une des 16 matrices 51.1,..., 51.16. Les entrées-sorties ES1,..., ES8 correspondent aux lignes de la matrice . Chacune de ces matrices est associée respectivement à un dispositif électronique de commande 52.1, ..., 52.16 qui comporte un microprocesseur. En outre, les matrices 51.1 à 51.16 possèdent chacune huit entrée-sorties ES'1,..,ES'8 correspondant aux colonnes de ces matrices et qui sont reliées à huit entrées-sorties des matrices 53.1 à 53.8 de la manière suivante : la i-ème entrée-sortie de la matrice 53.j est reliée à la j-ème entrée-sortie correspondant à une colonne de la matrice 51.i; i variant de 1 à 8; et j variant de 1 à 16. Chacune des matrices 53.1 à 53.8 est associée respectivement à un dispositif de commande 54.1 à 54.8, analogue aux dispositifs de commande 52.1 à 52.16.

Chaque cellule comprend une en-tête de 5 octets suivie de 48 octets d'information, quand elle entre dans le réseau de connexion 5. Cette en-tête comprend notamment : une étiquette identifiant le circuit virtuel d'un abonné, une ' étiquette identifiant éventuellement un faisceau virtuel regroupant une pluralité de circuits virtuels et un mot de détection d'erreur, portant sur l'entête. Le routage dans chaque étage de commutation, notamment dans les matrices du réseau de connexion 5, est réalisé au moyen d'une étiquette de routage qui est adjointe à l'entête de chaque cellule. Dans le centre satellite selon l'invention, cette étiquette de routage est insérée au niveau du réseau de connexion 5, au moment où une cellule entre dans ce réseau 5, au moyen des dispositifs 50.1 à 50.16.

Dans cet exemple de réalisation, les matrices de commutation du réseau 5 sont des matrices à 16 sorties. Déterminer le routage à chaque étage de commutation nécessite 4 bits. Le nombre maximal d'étages de commutation à traverser est égal à 5, par conséquent l'étiquette de routage doit comporter au moins 20 bits. Il est donc prévu d'adjointe une étiquette de routage de 3 octets, soit 24 bits, en tête de chaque cellule. Ceci conduit à des cellules comportant un plus grand nombre de bits et donc conduit à un changment de débit de 2,5 Gb/s à 2,6 Gb/s. Une suppresion des étiquettes de routage et un retour au débit initial de 2,5 Gb/s, est réalisé dans les multiplexeurs-démultiplexeurs, tels que 9, qui constituent une interface de transmission vers un centre de rattachement, du réseau général de télécommunication.

Il est à remarquer que les concentrateurs 2 et 7 fournissent un débit de 2,6 Gb/s bien qu'ils ne réalisent pas la fonction d'insertion des étiquettes de routage. En fait ils réalisent un espacement des cellules en prévision de l'insertion ultérieure des étiquettes de routage, par les dispositifs 50.1, 50.2..., 50.16.

Il apparaît que les dispositifs 50.1 à 50.16 regroupent les fonctions liées à l'accès au réseau de connection 5 : la vérification de l'en-tête de chaque cellule; la traduction de l'étiquette de circuit virtuel ou de faisceau virtuel; l'insertion d'une étiquette de routage devant l'en-tête préexistant; le calcul d'un nouveau mot de détection d'erreur portant sur l'ensemble de la nouvelle en-tête; et la fonction police. Ces fonctions sont situés à l'entrée du réseau de connexion 5, et non pas dans chaque circuit d'accès d'abonné, comme c'était le cas selon l'art antérieur. Ils sont communs pour quatre multiplex tels que MC1,...,MC4 qui correspondent à 256 terminaux d'abonné dans cet exemple de réalisation. Par conséquent, la réduction de leur nombre permet de réduire le coût de l'ensemble du satellite photonique.

Le déplacement de ces fonctions à l'entrée du réseau de connection est possible grâce à la caractéristique de la commutation par multiplexage temporel asynchrone, d'être un multiplexage statistique. En particulier la fonction de concentration des communications des terminaux d'abonnés est un multiplexage statistique de cellules venant de multiplex d'abonné peu chargés vers des multiplex ayant une charge plus élevée. La concentration étant une simple fonction de multiplexage statistique, il est possible de déplacer jusqu'à l'entrée du réseau de connection 5, les dispositifs remplissant les fonction mentionnées ci-dessus. Cependant cette disposition nécessite d'attribuer des étiquettes de circuit virtuel différentes pour l'ensemble des 256 terminaux d'abonné reliés à chaque concentrateur. Le CCITT a prévu 16 bits pour chaque étiquette de circuit virtuel dans l'en-tête de cellule, pour le champ étiquette de circuit virtuel, par conséquent il n'y a pas de problème pour attribuer des étiquettes différentes à des communications correspondant à 256 terminaux d'abonné reliés à un même concentrateur.

Une étiquette de circuit virtuel est attribuée à chaque communication par l'unité de commande 8. Cette étiquette désigne le circuit virtuel affecté à cette communication sur un multiplex, pour acheminer la communication soit vers le centre de rattachement du centre satellite, soit sur un multiplex vers un autre terminal d'abonné rattaché au même centre satellite, à travers le même concentrateur ou un autre concentrateur.

Une étiquette de routage est attribuée à chaque cellule d'une communication par l'unité de commande 8 pour router cette cellule à travers le réseau de conneion 5, ou à travers un concentrateur 2,7, etc. Dans ce dernier cas, l'étiquette de routage comporte, non seulement des informations pour la traversée des étages de commutation du réseau de connexion 5 mais des informations de routage pour la traversée du concentrateur auquel est rattaché le terminal d'abonné destinataire. En effet, pour acheminer une cellule du réseau de connection 5 vers un terminal d'abonné, il y a une commutation et pas seulement un démultiplexage dans l'étage 44 du concentrateur, pour les cellules en provenance du réseau de connection 5 et à destination d'un terminal d'abonné. Ceci apparaîtra ultérieurement au cours de la description détaillée du concentrateur 2.

Le réseau de connexion 5 a non seulement pour fonction d'aiguiller chaque cellule vers un multiplex relié au concentrateur destinataire de cette cellule, mais il réalise en outre une remise en ordre des cellules sortant sur chaque multiplex afin que l'étage 40 d'un concentrateur puisse les démultiplexer temporellement par un simple démultiplexage temporel périodique. Douze bits de l'étiquette de routage sont consacrés à aiguiller chaque cellule dans les trois étages du réseau 5, et deux autres bits sont consacrés à repérer l'ordre des cellules dans un groupe de quatre cellules sur un multiplex.

Les bits de routage sont lus dans les dispositifs de commande 52.1 à 52.16 et 54.1 à 54.8 associés aux matrices 51.1 à 51.1 et 53.1 à 53.8.

Ces dispositifs de commande aiguillent et retardent les cellules dans des files d'attente des matrices, en fonction des bits de routage. Les deux bits consacrés à repérer l'ordre sont attribués aux cellules de façon à repérer l'ordre où les cellules doivent sortir du réseau de connexion 5.

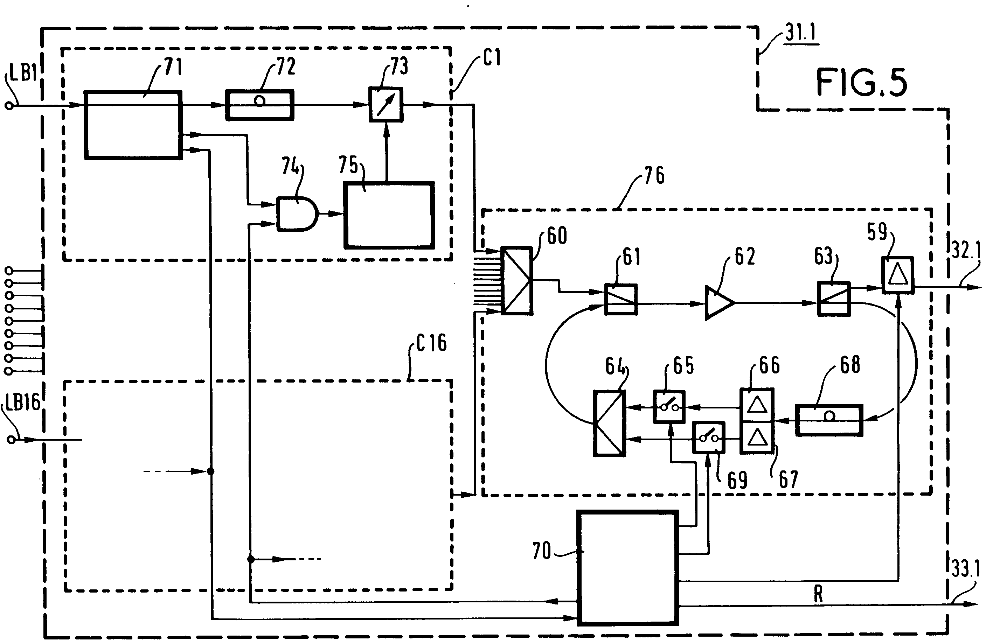

La figure 5 représente le schéma synoptique plus détaillée d'un exemple de réalisation du module 31.1 de l'étage 31 du concentrateur 2, qui réalise une première concentration des cellules en provenance des terminaux d'abonné, par un multiplexage temporel et spectral, statistique, non synchrone. Ce module 31.1 comprend : une première partie constituée de 16 codeurs C1 à C16, chacun permettant de coder une cellule avec une longueur d'onde différente choisie parmi 16; une seconde partie comportant une mémoire tampon 76 permettant d'inscrire et de lire 16 cellules codées par les 16 longueurs d'onde mentionnées précédemment; et un dispositif électronique de commande, 70, comportant une horloge locale.

Une entrée de chacun des codeurs C1 à C16 est reliée respectivement à l'une des lignes LB1 à LB16. Une sortie de chacun des codeurs est reliée à une entrée de la mémoire tampon 76.

La mémoire tampon 76 comporte :

– un filtre 59 commandable électriquement;

– un combineur 60 ayant seize entrées constituant les entrées de la mémoire tampon 76;

– deux coupleurs, 61 et 63, à trois accès;

– un amplificateur optique 62;

– un combineur 64 à deux entrées;

– deux portes optiques, 65 et 69, commandables électriquemnt;

– deux filtres périodiques, 66 et 67;

– une ligne à retard optique, 68, procurant un retard égal à la durée d'une cellule à 622 Mb/s.

Une sortie du combineur 60 est reliée à un premier accès d'un coupleur 61. Un deuxième accès du coupleur 61 est relié à une entrée de l'amplificateur optique 62. Une sortie de ce dernier est reliée à un premier accès du coupleur 63. Un deuxième accès de ce dernier constitue la sortie de la mémoire-tampon 76 et est relié à une entrée du filtre 59. La sortie du filtre 59 constitue la sortie de la mémoire 76 et du module 31.1.

Un troisième accès du coupleur 63 est relié à une première extrémité de la ligne à retard 68. Une seconde extrémité de la ligne à retard 68 est reliée aux deux filtres 66, 67 en parallèle. Ces deux filtres couvrent chacun une bande de longueurs d'onde comportant huit des longueurs d'onde utilisées pour coder les cellules. Ces filtres permettent donc d'éliminer les 16 longueurs d'onde, par groupes de 8. Le filtre 66 est relié à la porte optique 65. Le fitre 67 est relié à la porte 69. Les sorties des portes 65 et 69 sont reliées aux entrées du combineur 64. Une sortie de ce dernier est reliée au troisième accès du coupleur 61.

Un dispositif électronique de commande, 70, possède : deux sorties reliées respectivement à deux entrées de commande des portes 65 et 69, une sortie reliée à une entrée de commande commune à chacun des codeurs C1 à C16, une sortie reliée au module 33.1, et une entrée recevant des signaux de détection de cellules fournis par une sortie commune aux 16 codeurs C1 à C16.

Chaque codeur, par exemple le codeur C1, comporte :

– un dispositif 71 de détection de cellules, comportant une partie optique, non représentée, qui est traversée par le signal optique transportant les cellules et une partie électronique, non représentée, capable de reconnaître le début d'une cellule;

– une ligne à retard 72 retardant le signal optique issu du dispositif 71, pour laisser du temps de calcul à la partie électronique du dispositif 71 et au dispositif 70;

– un convertisseur de longueur d'onde 73 ayant : une entrée recevant un signal optique fourni par une sortie de la ligne à retard 72, une entrée de commande électrique, et une sortie constituant la sortie du codeur et fournissant un signal optique au combineur 60;

– une porte ET 74, électronique;

– et un circuit électronique de commande 75 qui fournit le signal de commande du convertisseur de longueur d'onde 73.

La porte ET 74 possède : une première entrée qui constitue l'entrée de commande du codeur, recevant un signal de commande fourni par le dispositif 70 pour déterminer la longueur d'onde du signal sortant du codeur; une deuxième entrée reliée à une sortie du dispositif 71 de détection de cellules, qui fournit un signal pour valider cette porte; et une sortie reliée à une entrée du circuit électronique de commande 75. La partie électronique du dispositif 71 comporte une sortie qui fournit un signal de détection de cellules à la sortie commune des codeurs, reliée à l'entrée du dispositif de commande 70.

Lorsqu'une cellule est détectée par le dispositif 71, le dispositif de commande 70 choisit la longueur d'onde avec laquelle cette cellule va être codée et transmet un message à l'entrée commune des codeurs C1 à C16. Ce message est transmis dans le codeur ayant reçu la cellule, la porte ET 74 étant validée dans ce codeur par le dispositif 71 de détection de cellules, et les portes homologues étant inhibées dans les autres codeurs. La cellule ainsi codée par une couleur est stockée dans la mémoire tampon 76.

Le dispositif 70 mesure l'écart de phase entre chaque début de cellule, et l'horloge locale. Il détermine la valeur R du retard à appliquer à chaque cellule pour la remettre en phase par rapport à cette horloge locale, puis transmet cette valeur au module 33.1 juste avant de lui transmettre la cellule correspondante.

Le fonctionnement de la mémoire tampon 76 est le suivant. Elle est constituée d'une boucle pouvant stocker jusqu'à seize cellules ayant respectivement seize couleurs différentes. L'amplificateur 62 régénère un signal optique chaque fois qu'il a fait un tour dans la mémoire tampon 76. Le retard procuré par la ligne à retard 68 correspond à une cellule. La lecture d'une cellule parmi 16 cellules stockées dans la mémoire tampon est réalisée par filtrage dans le filtre 59 pour ne lire qu'une cellule à la fois. L'effacement de la mémoire tampon 76 est réalisé par moitié, en effaçant huit cellules codées sur huit longueurs d'onde, pendant que huit autres cellules sont en cours d'inscription sur huit autres longueurs d'onde. Pour réaliser cette écriture et cet effacement par moitié, les portes optiques 65 et 69 sont alternativement ouvertes et fermées par le dispositif 70.

A ce stade, les cellules en provenance de 16 terminaux d'abonné sont concentrées sur la fibre optique unique 32.1 par un multiplexage spectral sur 16 longueurs d'ondes, mais elles ne sont pas synchronisées par rapport à l'horloge locale.

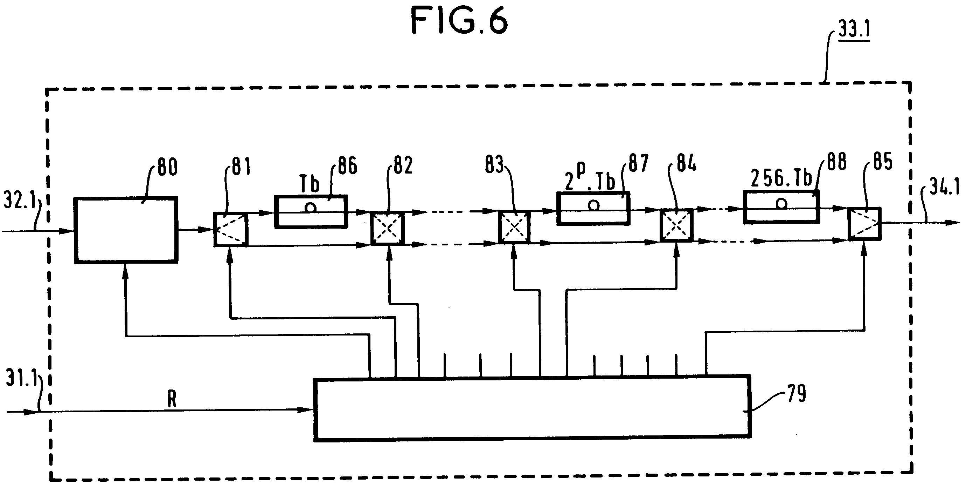

La figure 6 représente le schéma synoptique plus détaillé du module 33.1 de l'étage 33 du concentrateur 2, pour la remise en phase des cellules par rapport à l'horloge locale. Ce module 33.1 traite les cellules une par une. Il comprend :

– une ligne à retard réglable 80, commandable pour réaliser un retard compris entre 0 et Tb , Tb étant la période de bit;

– deux coupleurs, 81 et 85, ayant trois accès et étant commandables électriquement pour aiguiller un signal, fourni à une entrée, vers une sortie choisie parmi deux;

– 9 lignes à retard fixe, 86,..., 87,..., 88 réalisant des retards égaux à Tb , ..., $2^p$.Tb , ..., 256Tb; p variant de 0 à 8;

– 8 coupleurs à quatre accès, 82,..., 83,84, commandables électriquement pour aiguiller un signal fourni à une entrée quelconque parmi deux, vers une sortie choisie parmi deux;

– un dispositif de commande 79, relié au dispositif de commande 70 du module 31.1 pour recevoir la valeur R du retard à appliquer à chaque cellule.

La fibre 32.1 est reliée à une entrée de la ligne à retard 80. Une sortie de la ligne 80 est reliée à une entrée du coupleur 81. Le coupleur 81 transmet les cellules restituées par la ligne à retard 80, soit à une première entrée du coupleur 82 via la ligne à retard 86, soit directement à une deuxième entrée du coupleur 82. Ce dernier transmet les cellules soit sur sa première sortie, soit sur sa seconde sortie. Quand les cellules arrivent au coupleur 83, celui-ci les transmet soit à la première entrée du coupleur 84 via la ligne à retard 87, soit directement à la seconde entrée du coupleur 84. Les cellules sont transmises ainsi d'étage en étage jusqu'au coupleur 85 qui ne comporte que trois accès, une première entrée étant reliée à la sortie de la ligne à retard 88, une seconde entrée étant reliée directement à un autre coupleur en amont, et une sortie constituant la sortie de l'étage 33, reliée à la fibre optique 34.1. La ligne à retard réglable 80 et les coupleurs 81 à 85 possèdent des entrées de commande reliées respectivement à des sorties du dispositif de commande 79.

Chaque cellule comportant 424 bits à ce stade. Il est nécessaire de pouvoir retarder tous les bits d'une cellule d'un retard variable entre 0 et 424Tb. Le nombre 424 étant compris entre 256 et 512, l'étage 33 comporte 9 lignes à retard fixe, de valeur Tb, 2Tb, 4Tb, 8Tb, 16Tb, 32 Tb, 64Tb, 128 Tb, 256Tb, permettant de réaliser toutes les valeurs de retard comprises entre Tb et 512Tb, en combinant en série certaines des lignes à retard et en court-circuitant les autres, au moyen des coupleurs 82, 83, ..., 84, commandables électriquement par le dispositif 79. La ligne à retard réglable 80 permet d'affiner la remise en phase. Les cellules sortant sur la fibre 34.1 sont ainsi cadrées sur la période de cellule de l'horloge locale.

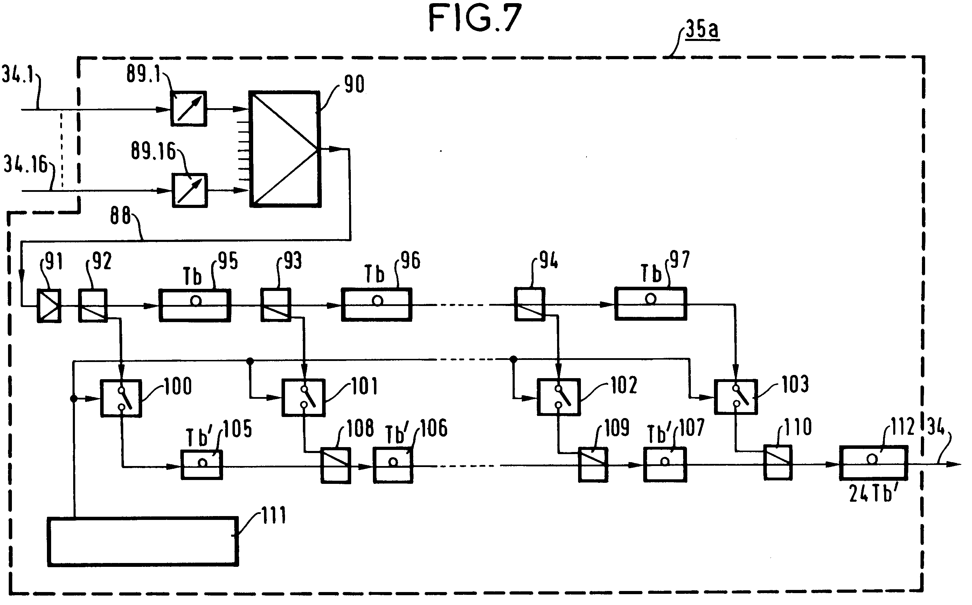

La figure 7 représente le schéma synoptique d'un premier exemple, 35a, de réalisation de l'étage 35 de multiplexage spectral et de changement de débit, opérant cellule par cellule, pour amener le débit de 622 Mb/s à 2,6 Gb/s. A ce stade, chaque cellule comprend 448 bits, car le changement de débit consiste en outre à rajouter un espace pour 24 bits de routage qui seront adjoints ultérieurement à l'en-tête de chaque cellule. En fait, l'étage 35 traite simultanément 16 cellules, car les seize modules de l'étage 33 lui fournissent simultanément seize cellules codées par seize couleurs pas forcément différentes. C'est pourquoi, sa première fonction consiste à refaire un multiplexage spectral sur seize couleurs, différentes les unes des autres.

Cet exemple de réalisation comporte :

– seize convertisseurs de longueur d'onde, 89.1 à 89.16, ayant seize entrées reliées respectivement aux seize fibres 34.1 à 34.16, pour attribuer seize couleurs différentes aux seize cellules fournies par les modules 33.1 à 33.16;

– un combineur, 90, à seize entrées reliées respectivement aux seize sorties des convertisseurs 89.1 à 89.16;

– un amplificateur optique 91;

– un premier jeu de 424 lignes à retard, 95, 96,...,97, procurant chacune un retard égal à la période Tb des bits pour le débit de 622 Mb/s;

– un second jeu de 424 lignes à retard, 105, 106,..., 107, procurant chacune un retard égal à la période T'b des bits pour le débit de 2,6 Gb/s;

– 424 coupleurs à trois accès 92, 93,..., 94, qui sont intercalés entre les lignes à retard du premier jeu;

– 424 coupleurs à trois accès, 108,...,109, 110, qui sont intercalés entre les lignes à retard du second jeu;

– 424 portes optiques, 100, 101,..., 102, 103;

– une ligne à retard 112 procurant un retard égal à 24.T'b correspondant à l'espace libre prévu pour 24 bits de routage;

– un dispositif de commande 111 commandant en parallèle toutes les portes optiques 100,..., à 103.

La sortie du combineur 90 est reliée à l'entrée de l'amplificateur 91. La sortie de ce dernier est reliée au premier jeu de lignes à retard, par l'intermédiaire du coupleur 92. Une première sortie de chacun des coupleurs 92 à 94 est reliée respectivement à une entrée des portes 100,...,102. La sortie de la ligne à retard 97 est reliée à une entrée de la porte 103. Une sortie de chacune des portes 101,..., 102 est reliée respectivement à une entrée de l'un des coupleurs 108,..., 109. Une sortie de la porte 100 est reliée à une entrée de la ligne à retard 105.

Le jeu de lignes à retard 95 à 97 constitue un premier registre à décalage ayant des sorties parallèles. Le second jeu de lignes à retards 105 à 107 constitue un second registre à décalage ayant des entrées parallèles. Les portes 100,..., 103 permettent de transférer le contenu du premier registre vers le second registre. Dans le premier registre, les bits de la cellule sont séparés par des intervalles de temps Tb correspondant au débit de 622 Mb/s. Lorsqu'une cellule complète est présente dans le premier registre, ses bits sont transférés simultanément dans le second registre. Les bits de cette cellule sont séparées dans le second registre d'un intervalle T'b correspondant au débit de 2,6 Gb/s. La ligne à retard 112 rallonge chaque cellule de 24 bits vides pour insérer ultérieurement 24 bits de routage, soit un total de 448 bits par cellule. La cellule devient alors une cellule au débit de 2,6 Gb/s, et elle est fournie à la fibre de sortie 34 par la sortie du coupleur 110. Les cellules fournies par cette sortie sont sous la forme de paquets de seize cellules synchrones ayant seize couleurs différentes, les unes des autres. Deux paquets successifs sont séparés par un intervalle libre, de durée approximativement égale à trois fois la durée d'un paquet, car le débit a été multiplié par quatre environ.

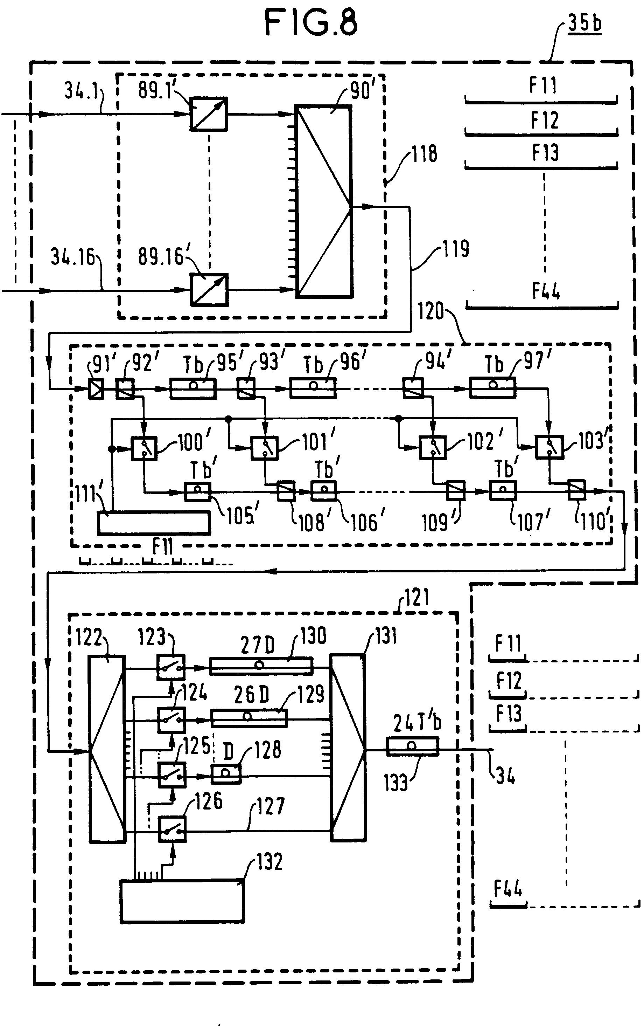

La figure 8 représente le schéma synoptique d'un second exemple de réalisation, 35b, de l'étage 35 de multiplexage spectral et de changement de débit. Cet exemple de réalisation opère par blocs de 16 bits au lieu d'opérer par cellules de 424 bits plus 24 bits vides, ce qui conduit à une importante réduction du nombre des composants nécessaires pour réaliser cet étage de changement de débit. Chaque cellule de 448 bits est découpée en vingt huit blocs de 16 bits, le vingt huitième bloc étant vide, et le vingt septième bloc ne contenant que 8 bits utiles. L'étage 35b comporte : une partie 118 réalisant un multiplexage spectral; une partie 120 réalisant le changement de débit par blocs de 16 bits, et une partie 121 réalisant une concaténation des blocs de 16 bits, après le changement de débit. En fait, l'étage 35b traite simultanément seize blocs, de seize couleurs différentes les unes des autres, car il refait un multiplexage spectral sur seize couleurs différentes notées, par exemple, F11, F12, F13, F14, F21,..., F44. La partie 120 restitue chaque cellule sous la forme d'une suite de vingt huit blocs de bits au rythme de 2,6 Gb/s avec des intervalles vides, de durée approximativement égale à trois fois la durée d'un de ces blocs, car le débit est approximativement multiplié par quatre.

La partie 121 concatène ces blocs et restitue des paquets de seize cellules synchrones, séparés par des intervalles vides de durée égale approximativement à trois fois la durée d'une cellule au débit de 2,6 Gb/s.

La partie 118 comporte :
– seize convertisseurs de longueur d'onde, 89'.1 à 89'.16, ayant seize entrées reliées respectivement aux seize fibres 34.1 à 34.16, pour attribuer seize couleurs différentes aux seize cellules fournies par les modules 33.1 à 33.16;
– un combineur, 90', ayant seize entrées reliées respectivement aux seize sorties des convertisseurs 89'.1 à 89'.16, et une sortie reliée à la partie 120 par une fibre optique unique 119.

La partie 120 comporte :
– un amplificateur optique 91';
– un jeu de 16 lignes à retard 95', 96',..., 97' procurant chacune un retard égal à une période de bit, Tb, à 622 Mb/s;
– seize coupleurs à trois accès, 92', 93',...,94';
– un second jeu de lignes à retard 105', 106',..., 107' procurant chacune un retard égal à une période de bit, T'b, à 2,6 Gb/s;
– seize coupleurs à trois entrées, 108',..., 109', 110';
– seize portes optiques 100', 101',..., 102', 103';
– un dispositif de commande 111' commandant en parallèle toutes les portes optiques 100' à 103', avec une période égale à la durée de 16 bits au débit de 622 Mb/s.

La structure de cette partie 120 est analogue à la structure de l'étage 35a décrit précédemment, mais les composants sont beaucoup moins nombreux et le rythme de transfert du premier au second registre est 28 fois plus rapide. Par contre, les blocs de 16 bits fournis par la sortie de la partie 120 sont séparés par des intervalles de temps où il n'y a aucun bit, par conséquent chaque cellule n'est plus une suite continue de 424 bits.

La partie 121 a pour rôle de rétablir la continuité des bits à l'intérieur de chaque cellule, en réalisant une concaténation des blocs de 16 bits. La partie 121 comporte :
– un diffuseur 122;
– 28 portes optiques 123, 124, ..., 126;
– un dispositif de commande 127 commandant électriquement les portes optiques 123 à 126, indépendamment des unes des autres;
– 28 lignes à retard fixe, 127, 128,..., 129, 130 procurant des respectivement égaux à O.D, 2.D, 3.D, ..., 25.D, 26.D, 27.D où D est la différence de durée entre un bloc de 16 bits au débit de 622 Mb/s et un bloc au débit de 2,6 Gb/s;
– un combineur 131, dont la sortie constitue la sortie de la partie 121 et de l'étage 35;
– un dispositif de commande 132;
– une ligne à retard 133 procurant un retard égal à 24.T'b.

Le diffuseur 122 possède 28 sorties reliées respectivement à 28 entrées du combineur 131 par l'intermédiaire des 28 portes 123 à 126, en série avec l'une des lignes à retard 127 à 130.

Pour chaque cellule, le premier bloc doit être retardé d'un retard égal à 27.D, le deuxième bloc doit être retardé d'un retard égal à 26.D, etc. Le dispositif de commande 132 commande successivement les portes 123 à 126 pour laisser passer le premier bloc dans la ligne à retard 130, le second bloc dans la ligne à retard 129, etc. Le 28ième bloc est transmis directement par la porte 126 jusqu'au combineur 131. A la sortie du combineur 131 chaque cellule est reformée d'une suite continue de 424 bits. Chaque cellule a une couleur différente parmi 16, et a un débit de 2,6 Gb/s. La ligne à retard 133 rajoute un espace vide devant chaque cellule pour adjoindre ultérieurement, à son en-tête, 24 bits de routage. A ce stade chaque cellule comporte donc 448 bits.

Le multiplexage spectral sur 16 couleurs permet d'utiliser très efficacement les étages 33 et 35, mais il ne convient pas pour la commutation dans le réseau de connexion 5. L'étage 37 a pour fonction de multiplexer temporellement ces cellules sur 4 fibres optiques pour constituer 4 multiplex à 2,6 Gb/s, avec une charge de 0,4 erlang, non multiplexés spectralement.

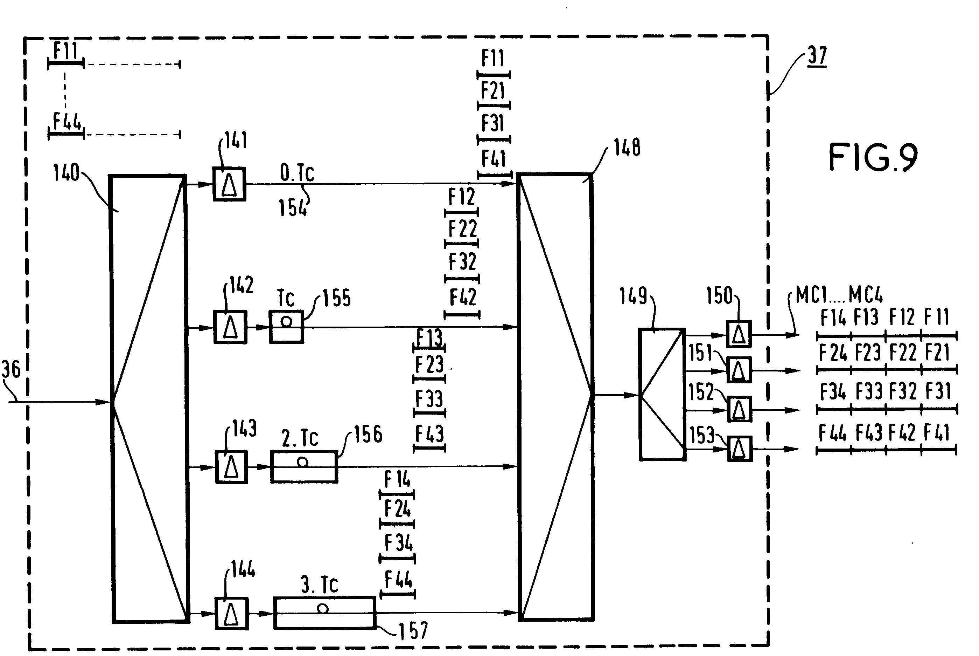

La figure 9 représente le schéma synoptique d'un exemple de réalisation de l'étage 37. Il reçoit des cellules fournies par la fibre 34 sous la forme de 16 cellules en synchronisme, multiplexées par 16 couleurs différentes notées F11, F12, F13, F14, F21,..., F41, F42, F43, F44. Chaque paquet de seize cellules est suivi d'un intervalle vide ayant une durée approximativement égale à trois périodes de cellule, au débit de 2,6 Gb/s.

Cet exemple de réalisation comporte :
– un diffuseur 140;
– un filtre périodique 141 laissant passer les couleurs F11, F21, F31, F41;
– un filtre périodique 142 laissant passer les couleurs F12, F22, F32, F42;
– un filtre périodique 143 laissant passer les couleurs F13, F23, F33, F43;
– un filtre périodique 144 laissant passer les couleurs F14, F24, F34, F44;
– quatre lignes à retard 154 à 157 procurant des retards égaux à 0Tc, 2.Tc, 3.Tc, où Tc est la période de cellule au débit de 2,6 Gb/s;
– un combineur 148;
– un diffuseur 149;
– un filtre passe-bande 150 laissant passer les couleurs F14, F13, F12, F11;
– un filtre passe-bande 151 laissant passer les couleurs F24, F23, F22, F21;
– un filtre passe-bande 152 laissant passer les couleurs F34, F33, F32, F31;
– un filtre passe-bande 153 laissant passer les couleurs F44, F43, F42, F41.

Le diffuseur 140 comporte 4 sorties qui sont reliées respectivement à 4 entrées du combineur 148 par 4 voies constituées respectivement : du filtre 141; du filtre 142 en série avec la ligne à retard 155; du filtre 143 en série avec la ligne à retard 156; et du filtre 144 en série avec la ligne à retard 157. La sortie du combineur 148 est reliée à l'entrée du diffuseur 149. Le diffuseur 149 possède quatre sorties qui sont reliées respectivement à quatre sorties de l'étage 37 respectivement par les filtres 150 à 153, pour fournir les multiplex MC1, ..., MC4.

Les quatre voies qui relient le diffuseur 140 au combineur 148 ont pour fonction de décaler les cellules en quatre paquets de quatre cellules synchrones.

La première voie transmet sans retard les cellules de couleur F11, F21, F31, F41. La deuxième voie transmet avec un retard égal une période de cellule, les cellules ayant les couleurs F12, F22, F32, F42. La troisième voie transmet, avec un retard égal à deux périodes de cellule, les cellules ayant les couleurs F13, F23, F33, F43. La quatrième voie transmet avec un retard égal à trois périodes de cellule, les cellules ayant les couleurs F14, F24, F34, F44.

Il apparaît que les cellules de couleur F11, F12, F13, F14 sont devenues successives et jointives dans le temps, il reste à les acheminer sur un multiplex séparé, par rapport aux cellules correspondant aux douze autres couleurs. Le diffuseur 149 a pour fonction de diffuser toutes les cellules de 16 couleurs, vers les quatre filtres 150 à 153 qui les répartissent en quatre multiplex MC1,...,MC4 physiquement séparés sur quatre fibres optiques. Le filtre 150 laisse passer les quatre cellules successives ayant les couleurs F14, F13, F12, F11. Simultanément, le filtre 151 laisse passer les quatre cellules successives ayant les couleurs F24, F23, F22, F21. Simultanément, le filtre 152 laisse passer les quatre cellules successives ayant les couleurs F34, F33, F32, F31. Simultanément, le filtre 153 laisse passer les quatre cellules successives ayant les couleurs F44, F43, F42, F41.

A la sortie de l'étage 37, les cellules gardent leurs diverses couleurs mais celles-ci ne constituent plus un multiplex spectral. Chaque cellule peut-être discriminée par l'intervalle temporel et par le multiplex qui la transporte.

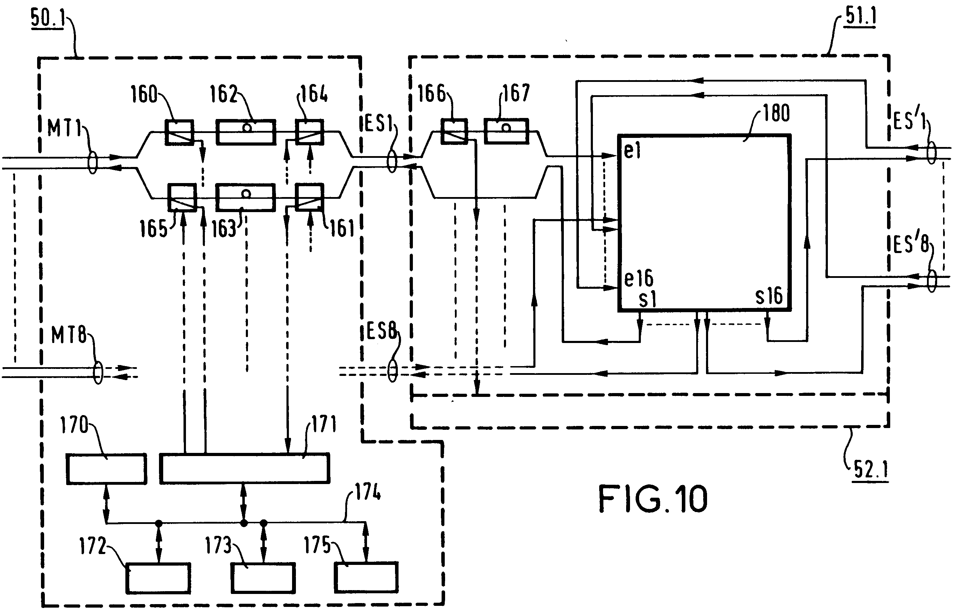

La figure 10 représente le schéma synoptique d'une partie du réseau de connexion 5, constitué du dispositif 50.1, de la matrice 51.1, et du dispositif de commande 52.1 associé à cette matrice. La matrice 51.1 comporte 8 entrées-sorties ES1...ES8 qui sont reliées au dispositif 50.1. et 8 entrées-sorties ES'1,...,ES'8 qui sont reliés respectivement aux matrices 53.1,...,53.8, non représentées sur cette figure. En pratique, cette matrice 51.1 est constituée d'une matrice 180, comportant 16 entrées correspondant aux lignes de la matrice, et 16 sorties correspondant aux colonnes de la matrice. Chaque entrée-sortie ES1,...,ES8 de la matrice 51.1 est donc constituée d'une entrée et d'une sortie séparées, reliées respectivement à l'une des 16 entrées e1,...,e16 de la matrice 180 et à l'une des 16 sorties S1,...,S16 de la matrice 180.

La matrice 51.1 comporte en outre seize coupleurs à trois accès, et seize lignes à retard, permettant de prélever quatre bits de routage dans chaque cellule et de les fournir au dispositif de commande 52.1. A titre d'exemple, l'entrée-sortie ES1 est reliée à l'entrée e1 de la matrice 180 par un coupleur 166 en série avec une ligne à retard 167 qui procure un retard égal au temps de traitement du dispositif 52.1 pour interpréter les bits de routage. L'entrée-sortie ES1 est reliée en outre, directement, à la sortie s1 de la matrice 180. Un accès du coupleur 166 est relié à une entrée du dispositif de commande 52.1 dont le schéma synoptique sera détaillé plus loin.

Le dispositif 50.1 comporte 8 paires de coupleurs à 3 accès, tels que les coupleurs 160, 161; 8 paires de lignes à retard, telles que les lignes à retard 162, 163; et 8 paires de coupleurs à trois accès et une entrée de commande électrique, tels que les coupleurs 164, 165. En effet, chaque multiplex bidirectionnel MT1,...,MT8 est acheminé dans le dispositif 50.1 par deux voies monodirectionnelles, ce qui conduit à doubler les composants de ce dispositif.

Le dispositif 50.1 comporte en outre :
– un microprocesseur 170;
– une interface d'entrée-sortie 171;
– une mémoire de traduction 172;
– une mémoire de signalisation 173;
– une mémoire de police 175;
– un bus 174 reliant tous les composants ci-dessus.

Les cellules en provenance de terminaux d'abonné, via un concentrateur, traversent successivement le coupleur 160, la ligne à retard 162 puis le coupleur 164. Le coupleur 160 est un coupleur passif dont le troisième accès est relié à une entrée de l'interface 171 pour lui transmettre les cinq octets d'en-tête de chaque cellule. La ligne à retard 162 procure un retard égal au temps de traitement de cette en-tête par le microprocesseur 170.

Le microprocesseur 170 assure : la vérification de cette en-tête en recalculant le mot de détection d'erreur et en le comparant à celui contenu dans l'entête; une traduction de l'étiquette de circuit virtuel ou éventuellement de faisceau virtuel, en consultant la mémoire 172 qui fournit une nouvelle valeur d'étiquette ; l'adjonction d'une étiquette de routage, à l'entête déjà existante; le calcul d'un nouveau mot de détection d'erreur pour tenir compte de la nouvelle étiquette de circuit virtuel, ou de faisceau virtuel; et la fonction police, de manière classique. Le coupleur 164 est un coupleur actif qui permet d'introduire dans la cellule une nouvelle en-tête, en la faisant précéder de 3 octets d'étiquette de routage. Pour cela, le coupleur 164 comporte un troisième accès relié à une sortie optique de l'interface 171 ; et une entrée de commande électrique reliée à une sortie l'interface 171, fournissant un signal électrique de validation.

Le coupleur 164 est utilisé en outre pour émettre des cellules de signalisation, ou de maintenance, à la place de cellules vides. La mémoire de signalisation 173 stocke des cellules de signalisation arrivant ou partant du réseau de connexion 5, par exemple des cellules de signalisation provenant, ou à destination, d'un système de commande du réseau général de télécommunication auquel est relié le centre satellite.

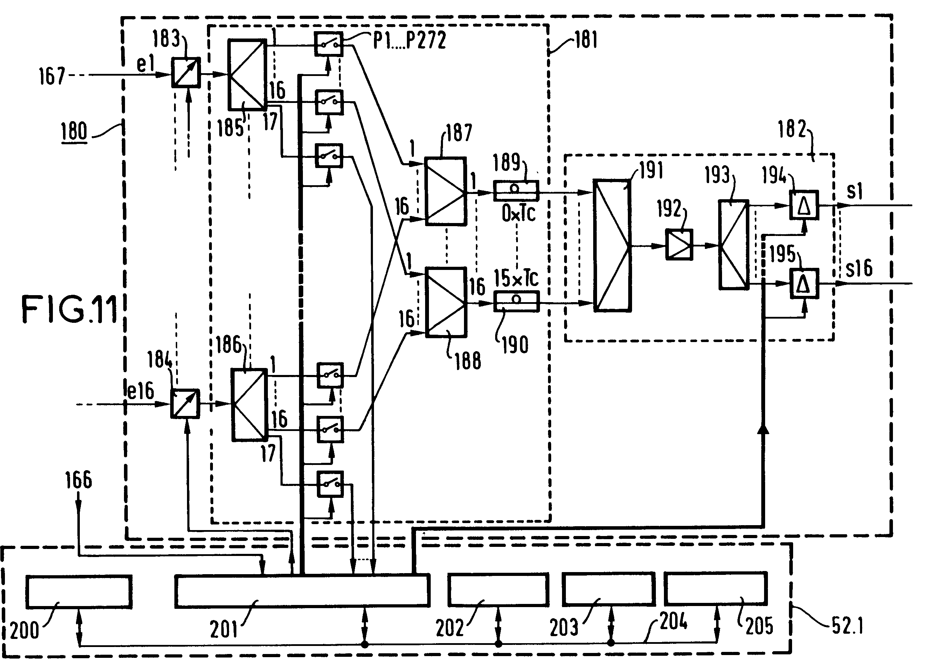

La figure 11 représente un schéma synoptique plus détaillé de la matrice de commutation 180 et du dispositif de commande 52.1 qui lui est associé. Le dispositif 52.1 comprend : un micro-processeur 200; une interface d'entrée-sortie, 201; une mémoire de routage, 202; une mémoire de pointeurs, 203; une mémoire de signalisation 205; et un bus 204 reliant tous ces éléments entre eux.

La matrice de commutation 180 comprend : 16 convertisseurs de longueur d'onde 183,..., 184; une mémoire-tampon 181; et un dispositif de commutation spatial 182. Les convertisseurs 183, ..., 184 ont : 16 entrées reliées respectivement aux 16 entrées e1,...,e16 de la matrice 180, 16 sorties reliées respectivement à 16 entrées de la mémoire-tampon 181, et 16 entrées de commande électriques reliées respectivement à des sorties de l'interface 201 du dispositif de commande 52.1.

Le dispositif 182 réalise une commutation spatiale pour transférer chaque cellule reçue sur l'une des 16 entrées e1,...,e16 de la matrice 180 vers l'une des 16 sorties s1,...,s16 de cette matrice 180.

La mémoire-tampon 181 a pour fonction de retarder les cellules, avant leur transfert dans le dispositif 182, pour résoudre les problèmes de contention, c'est-à-dire de conflit entre deux cellules arrivant simultanément et destinées à une même sortie de la matrice 180. Il est nécessaire de pouvoir retarder dans 16 files d'attente, de type FIFO, des cellules à destination de n'importe laquelle des 16 sorties s1,...,s16. Dans la matrice de commutation 180, les cellules peuvent prendre 16 couleurs différentes au moyen des convertisseurs 183 à 184, et la couleur des cellules permet de distinguer 16 files d'attente correspondant respectivement aux 16 sorties, tout en stockant les cellules dans un jeu de lignes à retard qui est commun pour toutes ces sorties.

Ces 16 files d'attente sont gérées par le microprocesseur 200 au moyen de pointeurs stockés dans la mémoire de pointeurs 203.

La valeur de chaque pointeur est comprise entre 0 et k-1, où k est le nombre des lignes à retard que comporte la mémoire 181. Ici k=16. Une prochaine cellule à stocker dans une file d'attente donnée sera inscrite dans la ligne à retard de rang q+1, si le pointeur de cette file est égal à q, et si q est inférieur à k-1. Si q =k-1 la file est saturée et cette cellule sera perdue, car elle ne peut être inscrite dans la mémoire tampon 181.

Les convertisseurs 183, ..., 184 sont commandés électriquement par le micro-processeur 200, via l'interface 201, en fonction de 4 bits que le dispositif 52.1 extrait de l'étiquette de routage, ces 4 bits indiquant le numéro de la sortie à laquelle est destinée la cellule. La couleur donnée à la cellule correspond à cette sortie de la matrice 180.

La mémoire de routage 202 stocke :
– des paramètres de commande des convertisseurs 183,...,184, pour attribuer une couleur à chaque cellule, selon la sortie à laquelle elle est destinée;

– un indicateur pour chaque cellule, indiquant si celle-ci fait partie d'une connexion point à point ou d'une connexion point à multipoints, dans ce dernier cas la mémoire de routage 202 fournissant des paramètres pour accorder une pluralité de filtres en sortie du dispositif 182.

La mémoire-tampon 181 comporte : 16 diffuseurs 185,..., 186; 272 portes optiques P1,...,P272; 16 combineurs 187,..., 188; et 16 lignes à retard 189,..., 190, procurant des retards respectivement égaux à O,Tc, 2Tc, 3Tc,...15Tc, où Tc est la période de cellule. Ces lignes à retard permettent de réaliser pour une cellule quelconque un retard compris entre 0 et 15Tc, indépendamment de la couleur de la cellule. Les diffuseurs 185,..., 186 comportent chacun une entrée constituant respectivement l'une des 16 entrées de la mémoire-tampon 181, et comportent 17 sorties reliées respectivement à l'une des 272 portes optiques P1, ...,P272.

Parmi les 17 sorties de chaque diffuseur, 16 sorties sont reliées par ces portes respectivement à une entrée de l'un des 16 combineurs 187,..., 188; et la dix-septième sortie est reliée par une porte à une entrée de l'interface 201 d'entrée-sortie, du dispositif de commande 52.1. Cette entrée de l'interface 201 est munie d'un dispositif de conversion optique-électronique, non représenté, et permet au micro-processeur 200 de recevoir le contenu des cellules de signalisation. Chaque entrée de chacun des combineurs 187,...,188 est ainsi reliée par l'une des portes P1,...,P272 à une sortie de l'un des diffuseurs 185,...,186. Ainsi toute cellule arrivant sur l'une quelconque des 16 entrées de la matrice 180 peut transiter par l'un quelconque des 16 combineurs 187,...,188, en ouvrant l'une des portes P1,...,P272, celles-ci étant commandées indépendamment les unes des autres par le micro-processeur 200 via l'interface 201.

Chaque combineur 187, ..., 188 possède une sortie qui est reliée à l'une des lignes à retard 189,...,190. Ainsi le dispositif de commande 52.1 choisit de retarder, d'un temps compris entre 0 et 15Tc, chacune des cellules arrivant sur l'une des 16 entrées de la matrice 180, en fonction des pointeurs contenus dans la mémoire 203, qui permettent de surveiller le flux de cellules à destination de chacune des 16 sorties, et de savoir quel est le retard attribué à chaque cellule. La mémoire-tampon 181 se comporte comme 16 files d'attente FIFO correspondant aux 16 sorties de la mémoire 180.

Le nombre de cellules stockables dans chaque file d'attente est fixé par le nombre k des lignes à retard 189,...,190. Dans cet exemple de réalisation, il est égal à seize. L'article "Buffer Sizing in an ATM Switch for both ATM and STM traffics" international Journal of digital and analog Cabled Systems vol 2, 247-252 (1989) montre qu'une mémoire tampon de sortie ayant une capacité de 16 cellules, par sortie, permet d'obtenir un taux de perte de cellules égal à $10^{-10}$. Il est possible d'obtenir un taux de perte donné, en choisissant le nombre k des lignes à retard 189,...,190.

Dans cet exemple de réalisation, les matrices 51.1 à 51.16 du réseau de connexion 5 assurent aussi la remise en ordre des cellules à destination d'un concentrateur, cet ordre étant connu grâce à deux bits de routage. Pour avoir à la sortie de la matrice un ordre donné, elles doivent être lue dans cet ordre, à l'intérieur de la mémoire-tampon 181. La file d'attente de chaque multiplex de sortie est gérée par le microprocesseur 200 comme quatre "sous-files d'attente" indépendantes destinées à stocker respectivement les cellules de rang 1, 2, 3, 4.

Considérons la mise en file d'attente de quatre cellules qui sont à émettre, dans l'ordre C1, C2, C3, C4 sur une sortie donnée de la matrice 181, alors qu'elles sont arrivées à des entrées de la matrice 181 dans l'ordre C2, C1, C4, C3, par exemple. La cellule C2 est inscrite dans la deuxième sous-file d'attente, la cellule C1 est inscrite dans la première sous-file d'attente, la cellule C4 est inscrite dans la quatrième sous-file d'attente, et la cellule C3 est inscrite dans la troisième sous-file d'attente. La sous-file d'attente d'écriture est choisie parmi les quatres sous-files d'attente correspondant à un multiplex donné, grâce aux 2 bits de routage indiquant le rang de chaque cellule. La sous-file d'attente de lecture est choisie de manière périodique : première, puis deuxième, puis troisième, puis quatrième, etc.

Le dispositif de commutation spatial 182 comporte :

– un combineur 191 ayant 16 entrées reliées respectivement aux 16 sorties de la mémoire-tampon 181, constituées, par les sorties des 16 lignes à retard 189,...,190;

– un amplificateur optique 192 amplifiant le signal optique fourni par une sortie du combineur 191;

– un diffuseur 193 ayant une entrée reliée à l'amplificateur 192, et 16 sorties;

– 16 filtres 194,..., 195 ayant chacun : une entrée reliée respectivement à une sortie du diffuseur 193; une entrée de commande électrique reliée à une sortie de l'interface 201 et sélectionnant une couleur parmi 16; et une sortie constituant l'une des 16 sorties s1,...,s16 de la matrice de commutation 180.

Le combineur 191, l'amplificateur 192, et le diffuseur 193 permettent d'appliquer toutes les cellules sortant de la mémoire-tampon 181 aux 16 filtres 194,...,195. Chaque filtre ne laisse passer que la couleur sélectionnée par le signal électrique de commande que fournit le dispositif de commande 52.1 pour chaque période de cellule. Généralement ils sont commandés pour filtrer chacun une couleur différente, pour acheminer une cellule d'un point à un autre point unique. Dans certains cas, par exemple, pour diffuser un message simultanément vers plusieurs destinataires, ces filtres peuvent être commandés pour filtrer une même couleur dans plusieurs filtres correspondant à plusieurs destinataires pour une même cellule.

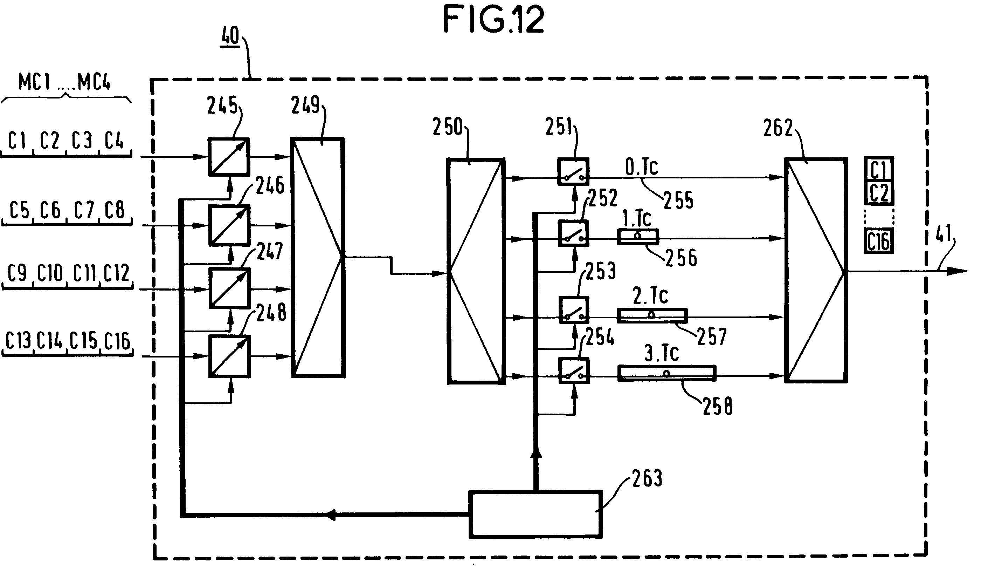

La figure 12 représente le schéma synoptique de l'étage 40 de multiplexage spectral et démultiplexage temporel, du concentrateur 2. Il reçoit sur les quatre multiplex MC1,...,MC4 des cellules avec des couleurs quelconques et un débit de 2,6 Gb/s. Il restitue, sur une fibre optique unique, 41, des paquets de seize cellules synchrones, au moyen d'un multiplexage spectral sur seize couleurs différentes, avec un débit de 2,6Gb/s. Deux paquets successifs de seize cellules sont séparés par un intervalle vide, de durée égale à trois périodes de cellule. Il comprend :

– quatre convertisseurs de longueur d'onde, 245 à 248, ayant quatre entrées reliées respectivement aux quatre multiplex MC1,...,MC4;

– un combineur 249 ayant quatre entrées reliées respectivement à quatre sorties des convertisseurs 245 à 248;

– un diffuseur 250 ayant une entrée reliée à la sortie du combineur 249 et ayant quatre sorties;

– portes optiques, 251 à 254, commandables électriquement;

– un jeu de quatre lignes à retard, 255 à 257, procurant des retards respectivement égaux à 0, Tc, 2Tc, 3Tc; où Tc est la période de cellule à 2,6 Gb/s;

– un combineur 262 ayant quatre entrées, et ayant une sortie constituant la sortie de l'étage 40, reliée à la fibre 41,

– un dispositif de commande 263 qui commande chacune des portes 251 à 254 indépendamment, et qui commande chacun des convertisseurs 245 à 248 indépendamment.

Chacune des sorties du diffuseur 250 est reliée respectivement à une entrée du combineur 262 par l'intermédiaire d'une porte, 251, ...,254 et d'une ligne à retard, 255,...,258.

Considérons le démultiplexage temporel :

– d'un paquet de quatre cellules successives, C1, C2, C3, C4, arrivant sur le multiplex MC1;

– d'un paquet de quatre cellules successives C5, C6, C7, C8, arrivant sur le multiplex MC2;

– d'un paquet de quatre cellules successives C9, C10, C11, C12, arrivant sur le multiplex MC3;

– et d'un paquet de quatre cellules successives C13, C14, C15, C16, arrivant sur le multiplex MC4;

ces quatre paquets arrivant simultanément.

Les quatre cellules de chaque paquet sont colorées successivement par l'un des convertisseurs, 245 à 248, de telle sorte que seize couleurs différentes sont attribués aux cellules C1 à C16. L'attribution des couleurs est périodique avec une période égale à quatre périodes de cellule.

Les quatre cellules de chaque paquet sont retardées respectivement d'un retard égal à 0,Tc, 2.Tc, 3.Tc de façon à les rendre synchrones entre elles. Pour cela, chaque porte 251 à 252 est ouverte successivement, pendant la durée d'une cellule, et périodiquement avec une période égale à quatre périodes Tc de cellule. Ainsi les cellules C4, C8, C12, C16, par exemple, sont transmises simultanément par la porte 254 et sont retardées simultanément par la ligne à retard 258, d'un retard égal à 3Tc. Elles arrivent au combineur 262 en même temps que les cellules C1, C5, C9, C13, par exemple, qui sont transmises simultanément par la porte 251 et qui sont transmises avec un retard nul par la ligne 255.

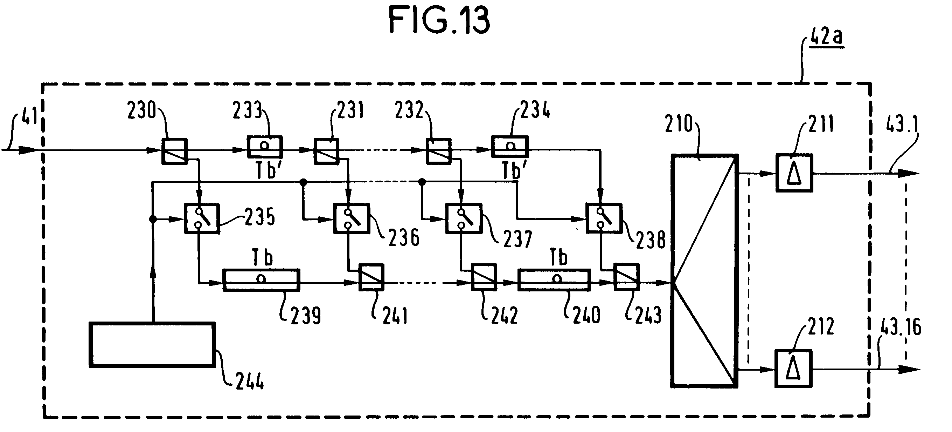

La figure 13 représente le schéma synoptique d'un premier exemple de réalisation, 42a, de l'étage 42 de changement de débit, du concentrateur 2. Cet exemple de réalisation opère cellule par cellule de manière analogue à l'étage 35a représenté sur la figure 7 et décrit précédemment. En fait, il traite simultanément seize cellules, car il reçoit simultanément seize cellules synchrones multiplexées spectralement par seize couleurs différentes.

Chaque cellule comporte 424 bits plus 24 bits d'étiquette de routage, soit 448 bits, à ce niveau du concentrateur 2. Le débit correspondant est donc de 657 Mb/s.

L'étage 42a comprend :

– une première série de 448 lignes à retard, 233,..., 234, procurant chacune un retard T'b égal à la période de bit au débit de 2,6 Gb/s;

– une première série de 448 coupleurs à trois accès, 230, 231,...,232 intercalés dans la première série de lignes à retard en amont de chacune de ces lignes respectivement;

– une seconde série de 448 lignes à retard, 239, ...,240 procurant chacune un retard égal à Tb', la période de bit au débit de 657 Mb/s;

– une seconde série de 448 coupleurs à trois accès, 241,..., 242, 243 intercalés dans la seconde série de lignes à retard, en sortie de chacune de ces lignes;

– 448 portes optiques, 235, 236,..., 237 commandables électriquement;

– un dispositif de commande 244 possédant une sortie commandant simultanément toutes les portes optiques 235, 236,..., 237, 238;

– un diffuseur 210 à seize sorties;

– seize filtres 211,...,212 accordés respectivement sur les 16 couleurs des cellules, ayant seize entrées reliées respectivement aux seize sorties du diffuseur 210, et ayant seize sorties constituant les seize sorties de l'étage 42a, reliées aux fibres 43.1,...,43.16.

La porte optique 235 relie un troisième accès du coupleur 230 à l'entrée de la ligne à retard 239. La porte optique 236 relie le troisième accès du coupleur 231 au troisième accès du coupleur 241 situé à la sortie de la ligne à retard 239, etc. La porte optique 237 relie un troisième accès du coupleur 232 au troisième accès du coupleur 242 situé à l'entrée de la ligne à retard 240. La porte optique 238 relie la sortie de la dernière ligne à retard, 234, de la première série de lignes à retard, au troisième accès du coupleur 243 situé à la sortie de la dernière ligne à retard, 240, de la seconde série de lignes à retard. Un accès du coupleur 230 constitue l'entrée de l'étage 42a et est relié à la fibre optique 41. Un accès du coupleur 243 est relié à une entrée du diffuseur 280.

Les deux séries de lignes à retard sont utilisées comme deux registres à décalage. Lorsqu'une cellule complète est stockée dans la première série de lignes à retard 233, ..., 234, le dispositif de commande 244 commande simultanément toutes les portes optiques 235 à 238 pour transférer simultanément 448 bits dans la seconde série de lignes à retard. Les bits arrivent dans la première série de lignes à retard, 230 à 234, au rythme 2,6 Gb/s et repartent de la seconde de série de lignes à retard, 239 à 240, au rythme de 657 Mb/s, puisqu'ils sont séparés chacun d'un retard égal à Tb'. Le diffuseur 210 et les filtres 211,...,212 démultiplexent spectralement chaque paquet de seize cellules en les répartissant sur seize fibres optiques de sortie, 43.1 à 43.16.

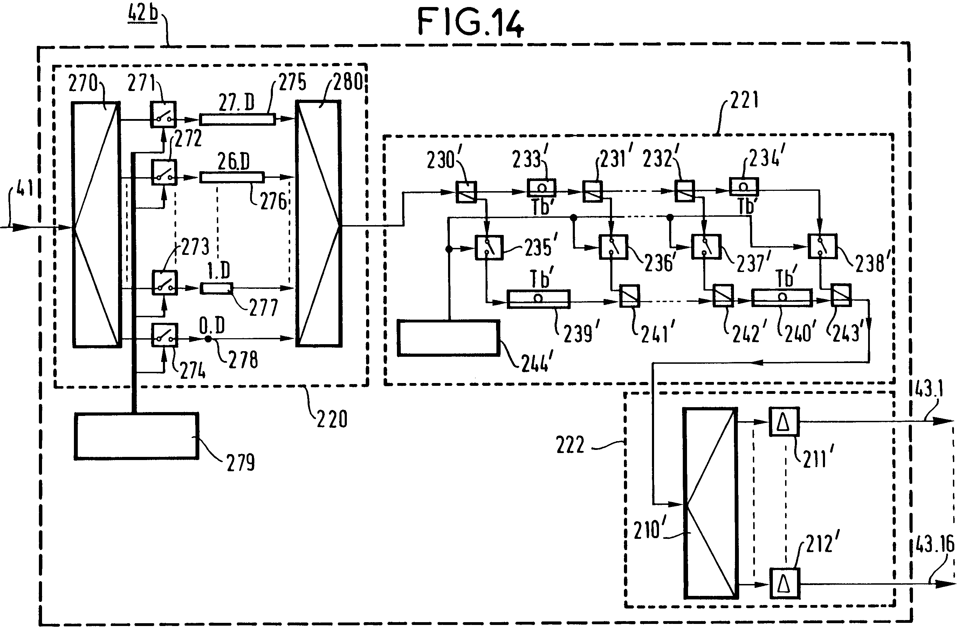

La figure 14 représente le schéma synoptique d'un second exemple de réalisation, 42b, de l'étage 42 de changement de débit, dans le concentrateur 2. Ce second exemple de réalisation est une variante optimisée du premier exemple de réalisation 42a. Les deux séries de 448 lignes à retard sont remplacées par deux séries de 16 lignes à retard, pour opérer un changement de débit par blocs de 16 bits, au lieu d'opérer cellule par cellule, afin de simplifier la réalisation. Cependant, il est nécessaire de découper préalablement les cellules en 28 blocs de 16 bits. L'étage 42b comporte donc : une première partie, 220, découpant chaque cellule en 28 blocs de 16 bits; une seconde partie, 221, réalisant le changement de débit bloc par bloc; et une troisième partie, 222, comportant un diffuseur 280' et seize filtres 281',...,282' pour démultiplexer spectralement chaque paquet de seize cellules en les répartissant sur seize fibres optiques de sortie, 43.1 à 43.16.

La première partie 220 comporte :

– un diffuseur 270 ayant une entrée reliée à la fibre optique 41 fournissant des cellules avec un débit de 2,6 Gb/s, et ayant 28 sorties;

– un combineur 280 ayant une sortie constituant la sortie de la première partie 220, qui est reliée à une entrée de la seconde partie 221, et ayant 28 entrées;

– vingt huit portes optiques commandables électriquement, 271, 272, ..., 273, 274;

– vingt sept lignes à retard, 275,..., 276, 277, 278 procurant des retards respectivement égaux à 27D, 26D,..., D, 0, où D est la différence de la durée d'un bloc de 16 bits au débit de 657 Mb/s, par rapport à sa durée initiale au débit de 2,6 Gb/s;

– un dispositif de commande 279 possédant des sorties reliées respectivement à des entrées de commande des portes optiques 271,..., 274.

Vingt sept sorties du diffuseur 270 sont reliées respectivemnt à l'une des vingt huit entrées du combineur 280 par une voie comprenant en série une porte optique et une ligne à retard.

Le dispositif de commande 279 commande successivement l'ouverture des portes 271, ..., 274, pour transmettre successivement les 28 blocs de 16 bits constituant chaque cellule. Un premier bloc est transmis sans retard, par la porte 274 et la liaison directe. Un deuxième bloc est transmis par la porte 273 pour être stocké et retardé dans la ligne à retard 277 procurant un retard correspondant à un bloc de 16 bits. Un troisième bloc est transmis par une porte, non représentée, dans une ligne à retard, non représentée, procurant un retard correspondant à deux blocs de 16 bits, etc. Le vingt huitième bloc est transmis par la porte 271 pour être stocké dans la ligne à retard 275 pendant une durée correspondant à 27 blocs de 16 bits. Ainsi la première partie 220 transmet des blocs de 16 bits à la seconde partie 221, en les espacant d'un retard correspondant à la durée de 16 bits au débit de 657 Mb/s, ce qui permet de traiter chaque bloc dans la partie 221 en disposant d'un temps libre égal à la durée d'un bloc de 16 bits au débit de 657 Mb/s.

La partie 221 a une structure analogue à celle du premier exemple de réalisation 42a décrit précédemment et représenté sur la figure 14, mais le nombre : de lignes à retard de la première série, 233', ..., 234'; de coupleurs intercalés dans la première série de lignes à retard 230', ..., 232'; de portes optiques, 235',..., 238'; de lignes à retard de la seconde série 239',..., 240'; et de coupleurs 241',..., 243' intercalés dans la seconde série de lignes à retard, est égal à 16 au lieu de 448. Par conséquent la réalisation de cet étage 42b de changement de débit est beaucoup plus simple que celle de l'étage 42a décrit précédemment.

Le diffuseur 210' et les convertisseurs 211',..., 212' jouent les mêmes rôles que les composants ayant la même référence dans l'exemple de réalisation 42a.

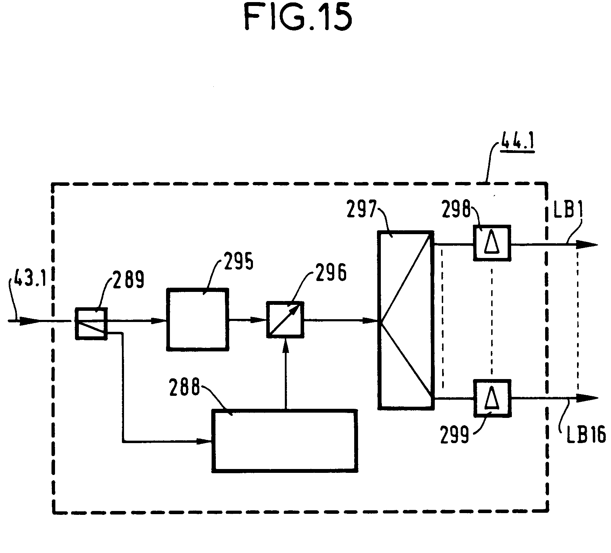

La figure 15 représente le schéma synoptique d'un exemple de réalisation d'un module, 44.1, de l'étage 44 réalisant une deuxième déconcentration par démultiplexage spectral, et un ajustement de débit. Il comporte :

– un coupleur 289 à trois accès;

– un dispositif 295 d'ajustement de débit qui supprime les trois octets d'étiquette de routage et change le débit de 657 Mb/s à 622 Mb/s, de façon à rétablir la continuité des bits après la suppression de l'en-tête de routage;

– un convertisseur de longueur d'onde, 296, ayant une entrée de commande électrique;

– un diffuseur 297, à 16 sorties;

– 16 filtres 298,..., 299, laissant passer respectivement 16 longueurs d'onde fixées, et possèdant des sorties qui constituent les 16 sorties du module 293, reliées aux lignes LB1,...,LB16;

– un dispositif 288 d'extraction d'étiquettes de routage.

Le coupleur 289 possède trois accès : un premier accès constitue l'entrée du module 44.1, un deuxième accès est relié à une entrée du dispositif 295 d'ajustement de débit, et un troisième accès est relié à une entrée du dispositif 288 d'extraction des étiquettes de routage. Ce dernier est de réalisation classique, et a pour fonction de commander le convertisseur de longueur d'onde 296 en lui fournissant un signal électrique sélectionnant une couleur pour donner à une cellule une couleur correspondant au contenu de son étiquette de routage. La sortie du dispositif 295 est reliée à l'entrée du convertisseur de longueur d'onde 296. La sortie de ce dernier est reliée à l'entrée du diffuseur 297. Les 16 sorties du diffuseur 297 sont reliées respectivement aux entrées des 16 filtres 298,...,299. Le filtre correspondant à la longueur d'onde d'une cellule laisse passer cette cellule à destination d'un terminal d'abonné.

Le dispositif d'ajustement de débit 295 ne sera pas décrit plus en détail, il a une structure analogue à celle de la partie 120 de l'étage 35b décrit précédemment et représenté sur la figure 8. Il est à la portée de l'homme de l'art d'adapter cette structure pour réaliser un changement de débit de 657 Mb/s à 622 Mb/s.

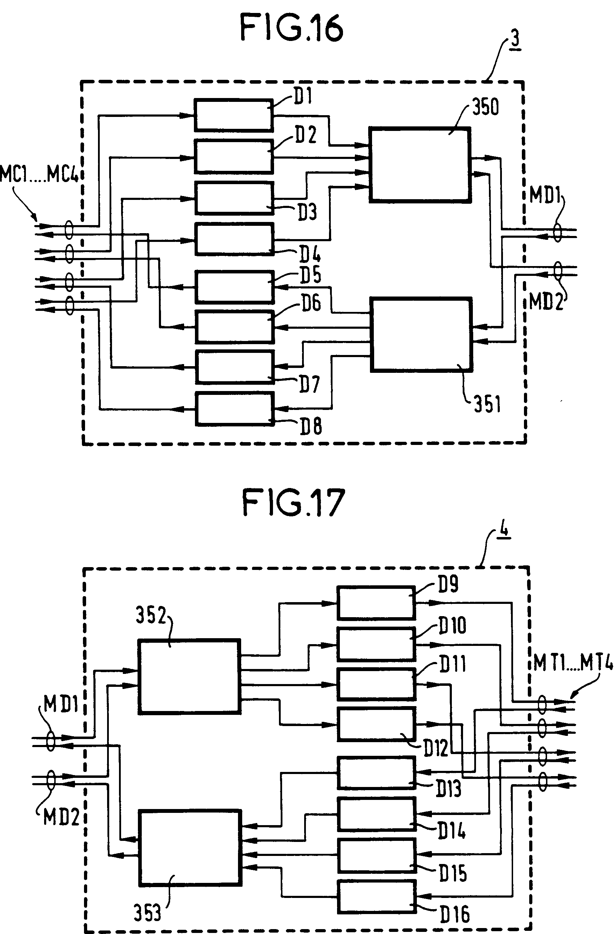

La figure 16 représente le schéma synoptique d'un exemple de réalisation du multiplexeur-démultiplexeur avec changement de débit, 3. Il comporte :

– quatre dispositifs de changement de débit, D1 à D4, recevant les cellules provenant du concentrateur 2 par les multiplex MC1 à MC4 avec un débit de 2,6 Gb/s; et restituant ces cellules avec un débit de 2,5 Gb/s;

– un multiplexeur statistique 350 recevant les cellules restituées par les dispositifs D1 à D4, sur quatre entrées; et restituant sur 2 sorties des cellules multiplexées temporellement, de telle sorte que la charge de chaque multiplex passe de 0,4 à 0,8 erlang, ces cellules étant acheminées ensuite par les multiplex MD1 et MD2 vers le multiplexeur-démultiplexeur 4;

– un démultiplexeur 351 recevant, sur deux entrées, des cellules fournies par les multiplex MD1 et MD2 avec un débit de 2,5 Gb/s et une charge maximale de 0,8 erlang; et restituant des cellules démultiplexées, sur quatre sorties, chaque multiplex n'ayant plus qu'une charge de 0,4 erlang;

– quatre dispositifs de changement de débit, D5 à D8, recevant les cellules démultiplexées par le démultiplexeur 351, à un débit de 2,5 Gb/s; et les restituant aux multiplex MC1 à MC4 avec un débit de 2, 6 Gb/s.

La figure 17 représente le schéma synoptique d'un exemple de réalisation du multiplexeur-démultiplexeur avec changement de débit, 4. Il comporte :

– un démultiplexeur 352 recevant des cellules fournies par les deux multiplex MD1, MD2, avec un débit de 2,5 Gb/s et une charge maximale de 0,8 erlang; et restituant, sur quatre sorties, des cellules démultiplexées avec un débit de 2,5 Gb/s et une charge maximale de 0, 4 erlang;

– quatre dispositifs de changement de débit, D9 à D12, reliés respectivement aux quatre sorties du démultiplexeur 352 pour recevoir des cellules démultiplexées, avec un débit de 2, 5 Gb/s, changer leur débit à 2,6 Gb/s, et les fournir aux multiplex MT1 à MT4;

– quatre dispositifs de changement de débit, D13 à D16, recevant respectivement des cellules fournies par les quatre multiplex MT1 à MT4 avec un débit de 2,6 Gb/s et une charge maximale de 0,4 erlang, et les restituant avec un débit de 2,5 Gb/s;

– un multiplexeur statistique 353 recevant sur 4 entrées des cellules restituées par les dispositifs D13 à D16 et les multiplexant temporellement pour les restituer, par deux sorties, aux deux multiplex MD1 et MD2 au débit de 2,5 Gb/s, avec une charge maximale de 0,8 erlang.

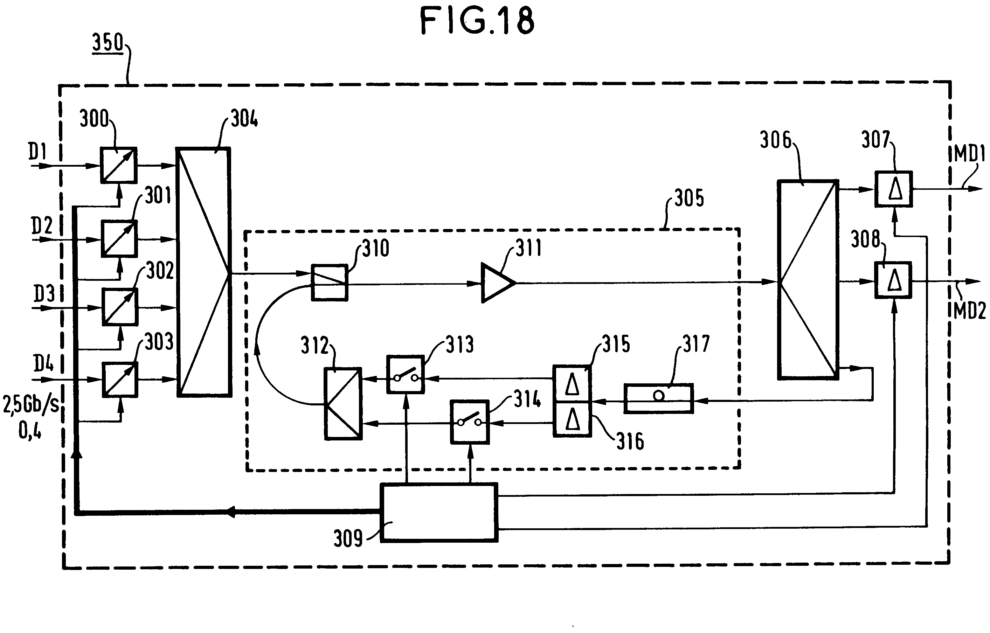

La figure 18 représente le schéma synoptique d'un exemple de réalisation du multiplexeur 350. Il comprend :

– quatre convertisseurs de longueur d'onde, 300 à 303, ayant chacun une première entrée recevant des cellules fournies respectivement par les quatre dispositifs de changement de débit D1 à D4;

– un combineur 304 ayant 4 entrées reliées respectivement à 4 sorties des convertisseurs 300 à 303;

– une mémoire-tampon 305 ayant une première entrée reliée à la sortie du combineur 304;

– un diffuseur 306 ayant une entrée reliée à la sortie de la mémoire-tampon 305 et ayant 3 sorties dont l'une est reliée à une seconde entrée de la mémoire-tampon 305;

– deux filtres commandables électriquement, 307 et 308, ayant deux entrées reliées respectivement à deux sorties du diffuseur 306, et ayant 2 sorties respectivement reliées aux deux multiplex MD1, MD2;

– un dispositif électronique de commande, 309, ayant des sorties reliées respectivement : à des entrées de commande des convertisseurs 301,...,303; à des entrées de commande de la mémoire 305; et à des entrées de commande des filtres commandables 307 et 308.

La mémoire-tampon 305 a une structure semblable à celle décrite précédemment pour l'étage 31 du concentrateur 2, et représentée sur la figure 5. Elle comporte :

– un coupleur 310 à 3 accès dont un premier accès constitue la première entrée de la mémoire 305;

– un amplificateur optique 311 ayant une entrée reliée à un deuxième accès du coupleur 310 et ayant une sortie constituant la sortie de la mémoire 305;

– un combineur 12 ayant une sortie reliée au troisième accès du coupleur 310;

– deux portes optiques 313 et 314 commandables électriquement, dont les sorties sont reliées respectivement à deux entrées du combineur 312 et qui ont des entrées de commande reliées à des sorties du dispositif électronique de commande 309;

– deux filtres périodiques 315 et 316 ayant deux sorties reliées respectivement à des entrées des portes 313 et 314;

– une ligne à retard 317, procurant un retard correspondant à la durée d'une cellule comportant 424 bits avec un débit de 2,5 Gb/s, dont la sortie est reliée à une entrée commune aux filtres 315 et 316, et dont l'entrée constitue la seconde entrée de la mémoire 305, qui est reliée à une sortie du diffuseur 306.

Les composants 310 à 317 constituent une boucle dans laquelle peuvent être stockées jusqu'à 16 cellules codées par seize couleurs différentes attribuées au moyen des convertisseurs 300,...,303. Le dispositif électronique de commande 309 connaît à chaque instant le nombre et la couleur des cellules stockées dans la mémoire-tampon 305. La lecture d'une cellule particulière est réalisée en accordant l'un des filtres commandables 307, 308 sur la couleur de cette cellule. Le dispositif 309 commande ensuite l'effacement de cette cellule dans la mémoire 305, au moyen du système d'effacement constitué par les composants 312 à 316. Le filtre 315 permet d'effacer 8 couleurs parmi les 16 couleurs possibles, et le filtre 316 permet d'effacer les 8 autres couleurs possibles. Le dispositif 309 sélectionne le filtre 315 ou le filtre 316 en commandant l'ouverture de l'une des deux portes optiques 313, 314. Lorsque les deux portes optiques sont ouvertes aucune des couleurs n'est éliminée, donc 16 cellules de 16 couleurs différentes peuvent tourner dans la boucle en étant régénérées par l'amplificateur 311. Une variante de réalisation du système d'effacement peut comporter deux filtres commandables électriquement, à la place des filtres fixes 315, 316 et des portes 313, 314.

Le multiplexeur statistique 353 du multiplexeur-démultiplexeur avec changement de débit, 4, peut être réalisé de la même manière que le multiplexeur 350 décrit ci-dessus.

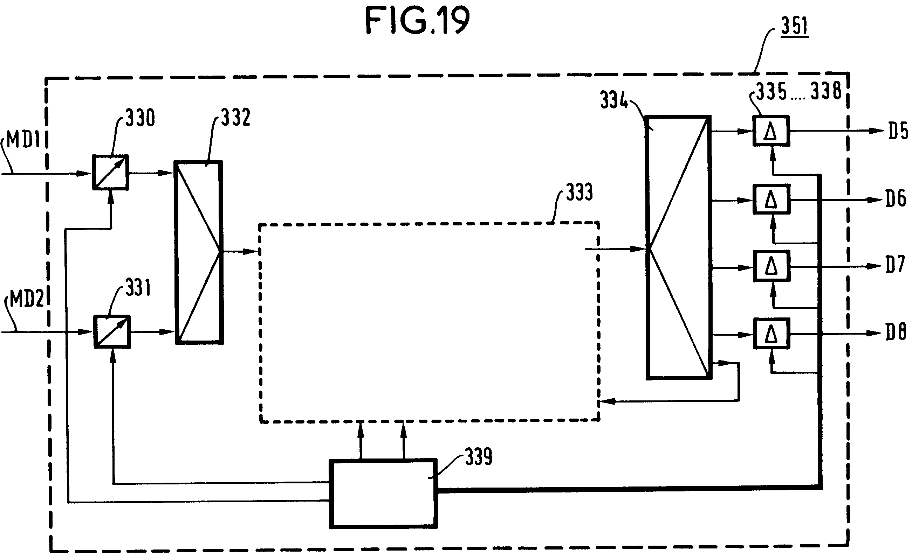

La figure 19 représente le schéma synoptique d'un exemple de réalisation du démultiplexeur 351. Il comporte :

– deux convertisseurs de longueur d'onde 330, 331 ayant chacun une entrée reliée respectivement aux deux multiplex MD1, MD2;

– un combineur 332 ayant 2 entrées reliées respectivement à deux sorties des convertisseurs, 330, 331;

– une mémoire-tampon 333 identique à la mémoire-tampon 305 décrite précédemment, ayant une première entrée reliée à une sortie du combineur 332;

– un diffuseur 334 ayant une entrée reliée à une sortie de la mémoire-tampon 333, et 5 sorties dont l'une est reliée à une seconde entrée de la mémoire 333;

– quatre filtres commandables électriquement, 335 à 338, ayant chacune une entrée reliée respectivement à une sortie du diffuseur 334, et une sortie reliée respectivement à l'entrée de l'un des circuits de changement de débit D5 à D8;

– un dispositif de commande électronique 339 ayant des sorties reliées respectivement à des entrées de commande des convertisseurs de longueur d'onde 330, 331, de la mémoire-tampon 333 et des filtres commandables 335 à 338.

Les cellules fournies par les multiplex MD1 et MD2 avec une charge maximale de 0,8 erlang sont affectées d'une couleur choisie parmi 16 au moyen des convertisseurs de longueur d'onde 330 et 331, de façon à stocker jusqu'à 16 cellules de couleurs différentes dans la mémoire-tampon 333. Le dispositif de commande 339 connaît à chaque instant le nombre et la couleur des cellules stockées dans la mémoire 333. Il commande la lecture des cellules stockées, pour les envoyer successivement vers les dispositifs de changement débit, D5 à D8, en commandant les filtres 335 à 338 de façon à laisser passer une cellule sélectionnée, vers l'une des sorties du démultiplexeur 351. Quand huit cellules ont été lues dans la mémoire 333, le dispositif de commande 339 commande le système d'effacement pour effacer de la mémoire 333 les cellules ayant ces 8 couleurs.

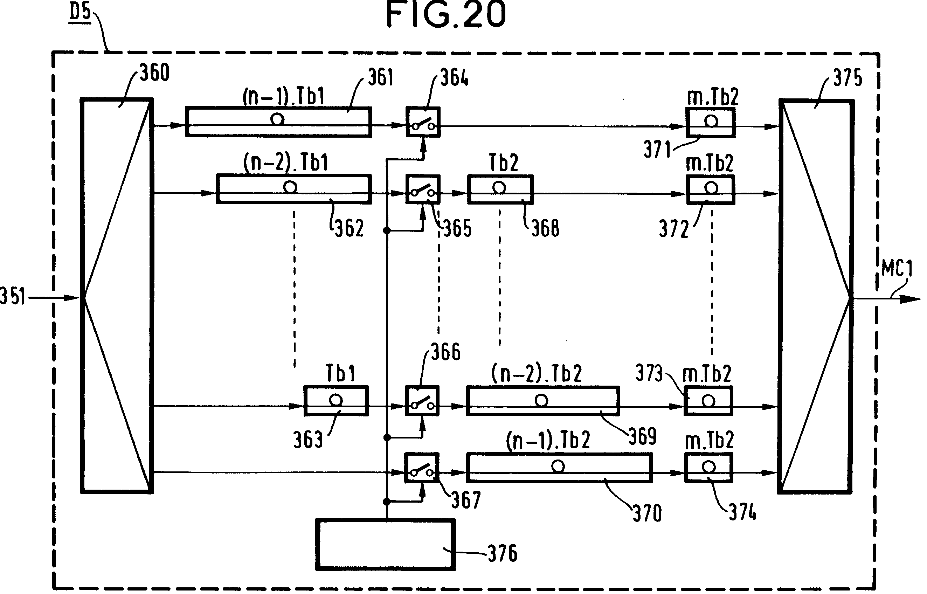

La figure 20 représente le schéma synoptique d'un circuit de changement de débit, le circuit D5 par exemple. Il comporte :

– un diffuseur 360 ayant une entrée reliée à la sortie du démultiplexeur 351 pour recevoir des cellules avec un débit de 2,5 Gb/s, et ayant n sorties, n étant le nombre de bits des cellules, qui est égal à 424 pour le circuit D5;

– (n-1) lignes à retard 361, 362,...,363, procurant des retards respectivement égaux à (n-1).Tb1, (n-2).Tb1,...,Tb1, ayant chacune une entrée respectivement reliée à une sortie du diffuseur 360; Tb1 étant la période de bit avant le changement de débit, c'est-à-dire la période de bit correspondant à 2,6 Gb/s pour le circuit C1;

– n portes optiques commandables électriquement, 364, 365,...,366, ayant chacune une entrée reliée respectivement à la sortie de l'une des lignes à retard 361, 362,...,363; et une porte 367 ayant une entrée reliée directement à une sortie du diffuseur 360;

– n lignes à retard, 368,...,369, 370, procurant respectivement des retards égaux à $Tb2,...,(n-2).Tb2, (n-1).Tb2$, ayant chacune une entrée reliée respectivement à l'une des sorties des portes 365,...,366, 367, $Tb2$ étant la période de bit pour la nouvelle valeur de débit qui est 2,5 Gb/s pour le circuit D1;

– n ligne à retard supplémentaire 371, 372,...,373, 374, procurant chacune un retard égal à $m.Tb2$, m étant le nombre de bits d'une étiquette de routage c'est-à-dire 24 dans ce centre satellite;

– un combineur 375 ayant : une entrée reliée directement à la sortie de porte 364; n-1 entrées reliées respectivement aux sorties des lignes à retards supplémentaires 371, 372,..., 373, 374; et une sortie constituant la sortie du circuit D5, qui est reliée au multiplex MC1 et qui lui fournit des cellules avec un nouveau débit de 2,6 Gb/s;

– un dispositif électronique de commande 376 ayant une sortie reliée à des entrées de commande des portes 364, 365,..., 366, 367.

Ainsi les n sorties du diffuseur 360 sont toutes reliées à une entrée de l'une des portes 364, 365,..., 366, 367 par n lignes à retard dont les retards vont de 0 à $(n-1).Tb1$ par pas égaux à $Tb1$. Par conséquent, n bits d'une même cellule arrivent à l'entrée de ces portes simultanément. Le dispositif de commande 376 ouvre alors simultanément toutes les portes 364 à 367 pour transférer ces n bits dans l'autre série de lignes à retard correspondant à la durée $Tb2$ des bits pour le second débit. La sortie de la porte 364 est reliée directement à l'entrée de la ligne à retard supplémentaire 371. Les sorties de toutes les autres portes 365,...,366, 367 sont reliées respectivement aux entrées des lignes à retard supplémentaires 372,...,373, 374 par un jeu de lignes à retards 368, 369,...,370 dont les retards vont de 0 à $(n-1). Tb2$ par pas égaux à $Tb2$.

Par conséquent, des bits émis simultanément par les lignes à retards 361,...,363 arrivent avec un décalage croissant à l'entrée des lignes à retards supplémentaires 371, 372,...,373, 374. Ils sont alors étalés à des intervalles égaux à la nouvelle période de bit $Tb2$. Les lignes à retards supplémentaires les retardent uniformément d'un retard $mTb2$ pour laisser un intervalle de temps libre entre deux cellules successives pour insérer ultérieurement m bits d'étiquette de routage, m étant égale à 24 dans cet exemple. A la sortie du combineur 375 les différents bits d'une même cellule se présentent en série, avec une période de bit $Tb2$ correspondant au débit souhaité :

2,6 Gb/s.

Les circuits de changement de débit D6, D7, D8 sont naturellement réalisés que la même façon que le circuit D5 décrit ci-dessus. Les circuits de changement de débit D1, D2, D3, D4 réalisant un changement de débit de 2,6 Gb/s à 2,5 Gb/s sont réalisés de manière analogue en remplaçant Tb1 par Tb2 pour les lignes à retards 361, 362,..., 363; et en remplaçant Tb2 par Tb1 pour les lignes à retard 368,...,369, 370. Par contre, les lignes à retards supplémentaires 371, 372,..., 373, 374 n'ont pas lieu d'être puisqu'il n'y a pas d'étiquette de routage à insérer pour les multiplex MD1, MD2. Les circuits de changement de débit D9 à D12 du multiplexeur-démultiplexeur 4 sont identiques au circuit D5 décrit précédemment, les lignes à retard supplémentaire étant conservées avec le même retard supplémentaire $m.Tb2$. Les circuits de changement de débit D9 à D12 sont analogues au circuit D5 décrit précédemment, sauf que les lignes à retard supplémentaire 371, 372,...,373, 374 sont supprimées, et que les valeurs Tb1 et Tb2 sont permutées.

Les multiplexeurs-démultiplexeurs, tel que 9, reliant le réseau 5 à un central de rattachement, sont analogues aux multiplexeurs-démultiplexeurs 3 et 4, décrits ci-dessus.

La portée de l'invention n'est pas limitée aux exemples de réalisation décrite ci-dessus. De nombreuses variantes sont à la portée de l'homme de l'Art. Il est notamment possible de réaliser la remise en ordre des cellules à destination des terminaux d'abonné au moyen d'un étage spécialisé placé en amont de l'étage 40, dans chaque concentrateur, interprétant deux bits de routage pour reconstituer l'ordre des cellules, et comportant une mémoire ayant une capacité au moins égale à quatre cellules pour chaque multiplex reliant un concentrateur au réseau de connexion.

**Revendications**

1) Centre satellite photonique, pour raccorder à un réseau de télécommunication des terminaux d'abonné émettant et recevant des données sous la forme de cellules, de longueur fixe, par un multiplexage temporel asynchrone, comportant :

– un réseau de connexion (5) relié à un central de rattachement;

– une unité de commande (8) reliée au réseau de connexion (5);

– une pluralité de concentrateurs (2,7) reliés au réseau de connexion (5) ;

– des circuits d'accès d'abonné (1,6) reliés respectivement aux terminaux d'abonné et aux concentrateurs (2,7) ;

ce réseau, cette unité de commande, ces concentrateurs et ces terminaux de ligne comportant :

-- des moyens pour traduire une étiquette de circuit virtuel ou de faisceau virtuel, que comporte chaque cellule émise ou reçue par le centre satellite, et lui adjoindre une étiquette de routage pour router cette cellule dans ce centre satellite;

-- des moyens pour mettre en phare avec une horloge locale chaque cellule émise par un terminal d'abonné;

-- des moyens pour réaliser une fonction police;

caractérisé en ce que les moyens (50.1,...,50.16) pour traduire une étiquette de circuit virtuel ou de faisceau virtuel, pour chaque cellule émise ou reçue par le centre satellite, et lui adjoindre une étiquette de routage, sont si tués dans le réseau de connection (5) et sont communs pour traiter les cellules émises ou reçues en direction de tous les terminaux d'abonné reliés à au moins un concentrateur (2, 7).

**2)** Centre satellite photonique selon la revendication 1, caractérisé en ce que les moyens (50.1,...,50.16) pour réaliser la fonction police sont situés dans le réseau de connexion (5) et sont communs pour traiter les cellules émises par tous les terminaux d'abonné reliés à au moins un concentrateur (2,7).

**3)** Centre satellite selon la revendication 1, dans lequel les moyens (33.1,...,33.16) pour mettre en phase sont situés dans chaque concentrateur (2, 7);

caractérisé en ce que chaque concentrateur (2, 7) comporte en outre, des moyens (31.1,...,31.16) pour multiplexer spectralement des cellules reçues en provenance de terminaux d'abonné, situés en amont des moyens (33.1,...,33.16) pour mettre en phase.

**4)** Centre satellite selon la revendication 1, caractérisé en ce que chaque concentrateur (2, 7) comporte en outre :

– des moyens (35) pour multiplier le débit des cellules multiplexées spectralement et remises en phase;

– des moyens (37) pour multiplexer temporellement, sans multiplexage spectral, les cellules restituées par les moyens (35) pour multiplier le débit.

**5)** Centre satellite selon la revendication 1, caractérisé en ce que, pour émettre des cellules vers des terminaux d'abonné, chaque concentrateur (2, 7) comporte des moyens (44) pour démultiplexer spectralement des cellules.

**6)** Centre satellite selon la revendication 5, caractérisé en ce que, pour émettre des cellules vers des terminaux d'abonné, chaque concentrateur (2, 7) comporte en outre :

– des moyens (40) pour démultiplexer temporellement des cellules fournies par le réseau de connexion (5), à destination de terminaux d'abonné, puis les multiplexer spectralement.

– des moyens (42) pour diviser le débit des cellules fournies par les moyens (40) pour démultiplexer temporellement et multiplexer spectralement, ces moyens pour diviser étant situés en amont des moyens (44) pour démultiplexer spectralement.

**7)** Centre satellite selon la revendication 6, caractérisé en ce que les moyens (40) pour démultiplexer temporellement et multiplexer spectralement des cellules fournies par le réseau de connexion (5), à destination de terminaux d'abonné, ont un fonctionnement périodique;

et en ce que le réseau de connexion (5) comporte en outre des moyens (51.1, 52.1, 53.1, 54.1,...) pour remettre en ordre, en fonction d'une étiquette de routage, des cellules multiplexées temporellement, avant de les fournir à un concentrateur (2, 7).

FIG.1

# FIG.2

# FIG.3

EP 0 497 669 A1

# FIG.4

MT1...MT128

5

50.1    ES1...ES8    51.1    ES'1...ES'8

1

50.2    52.1    51.2    53.1

16    54.1

52.3

1

53.8

50.16    51.16    16

54.8

52.16

FIG.5

FIG.6

# FIG.7

EP 0 497 669 A1

# FIG.8

FIG.9

EP 0 497 669 A1

FIG.10

EP 0 497 669 A1

FIG.11

# FIG.12

MC1 ....MC4

C1 C2 C3 C4

C5 C6 C7 C8

C9 C10 C11 C12

C13 C14 C15 C16

40

245

249

250

251

0.Tc

255

262

C1
C2

C16

41

246

252

1.Tc

256

247

253

2.Tc

257

248

254

3.Tc

258

263

31

EP 0 497 669 A1

# FIG.13

# FIG.14

EP 0 497 669 A1

# FIG.15

# FIG.16

# FIG.17

FIG.18

# FIG.19

EP 0 497 669 A1

FIG.20

EP 0 497 669 A1

## Office européen des brevets

## RAPPORT DE RECHERCHE EUROPEENNE

Numero de la demande

EP 92 40 0188

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 351 729 (FUJITSU)<br>* Abrégé; page 3, lignes 19-22; page 5, lignes 38-58; page 6, lignes 22-33; page 7, ligne 45 - page 10, ligne 12; figures 4-16 * | 1-4 | H 04 Q 11/00<br>H 04 L 12/56 |
| A | | 5-7 | |
| Y | PROCEEDINGS OF THE INTERNATIONAL SWITCHING SYMPOSIUM, Stockholm, 28 mai - 1 juin 1990, vol. 5, pages 21-26; T. KOINUMA et al.: "An ATM switching system based on a distributed control architecture"<br>* Le document en entier * | 1,2,4 | |
| Y | IEEE JOURNAL ON SELECTED AREAS IN COMMUNICATIONS, vol. 6, no. 7, août 1988, pages 1096-1106, New York, US; R.A. THOMPSON: "Architectures with improved signal-to-noise ratio in photonic systems with fiber-loop delay lines"<br>* Page 1103, colonne de gauche, ligne 14 - colonne de droite, ligne 4; figure 6 * | 3 | **DOMAINES TECHNIQUES RECHERCHES (Int. Cl.5)**<br><br>H 04 Q<br>H 04 L<br>H 04 J |
| A | EP-A-0 282 071 (CSELT)<br>* Abrégé; colonne 2, lignes 37-50; colonne 6, lignes 26-31; colonne 7, lignes 9-17; figures 1,2,6 *<br>---      -/- | 4,7 | |

Le présent rapport a été établi pour toutes les revendications

| Lieu de la recherche | Date d'achèvement de la recherche | Examinateur |
|---|---|---|
| LA HAYE | 13-04-1992 | O'REILLY D.J.K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

39

Office européen
des brevets

**RAPPORT DE RECHERCHE EUROPEENNE**

Numero de la demande

EP  92 40 0188

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | ELECTRONICS LETTERS, vol. 26, no. 22, 25 octobre 1990, pages 1895-1896, Stevenage, GB; T. TSUKADA et al.: "40 Gbit/s optial time division cell multiplexer for a photonic ATM switch" * Le document en entier * ----- | 4,7 | |
| | | | **DOMAINES TECHNIQUES RECHERCHES (Int. Cl.5)** |

Le présent rapport a été établi pour toutes les revendications

| Lieu de la recherche | Date d'achèvement de la recherche | Examinateur |
|---|---|---|
| LA HAYE | 13-04-1992 | O'REILLY D.J.K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................
& : membre de la même famille, document correspondant

EPO FORM 1503 03.82 (P0402)